(19) **Europäisches Patentamt**
**European Patent Office**
**Office européen des brevets**

(11) **EP 1 475 764 B1**

(12) **EUROPÄISCHE PATENTSCHRIFT**

(45) Veröffentlichungstag und Bekanntmachung des Hinweises auf die Patenterteilung:
**06.06.2007 Patentblatt 2007/23**

(51) Int Cl.:
***G08G 1/16*** *(2006.01)*

(21) Anmeldenummer: **04010318.6**

(22) Anmeldetag: **30.04.2004**

(54) **Verfahren und Vorrichtung zur Ermittlung der Wahrscheinlichkeit für eine Kollision eines Fahrzeugs mit einem Gegenstand**

Method and apparatus for calculating the probability of a collision between a vehicle and an object

Méthode et appareil pour calculer la probabilité d'une collision entre une véhicule et un objet

(84) Benannte Vertragsstaaten:
**AT BE BG CH CY CZ DE DK EE ES FI FR GB GR HU IE IT LI LU MC NL PL PT RO SE SI SK TR**

(30) Priorität: **02.05.2003 DE 10319700**

(43) Veröffentlichungstag der Anmeldung:
**10.11.2004 Patentblatt 2004/46**

(73) Patentinhaber: **IBEO Automobile Sensor GmbH**
**22179 Hamburg (DE)**

(72) Erfinder:
• **Lages, Ulrich, Dr.**
**21031 Hamburg (DE)**

• **Willhoeft, Volker**
**22303 Hamburg (DE)**
• **Dittmer, Martin**
**21271 Hanstedt (DE)**

(74) Vertreter: **Manitz, Finsterwald & Partner GbR**
**Postfach 31 02 20**
**80102 München (DE)**

(56) Entgegenhaltungen:
**EP-A- 1 245 443      US-A1- 2003 139 883**

## Beschreibung

Die vorliegende Erfindung betrifft ein Verfahren und eine Vorrichtung zur Ermittlung einer Wahrscheinlichkeit einer Kollision zwischen einem Fahrzeug und einem Gegenstand.

Um eine Kollision eines Fahrzeugs mit einem relativ zu diesem bewegten Gegenstand vermeiden oder die Folgen einer solchen Kollision entschärfen zu können, ist es hilfreich, eine bevorstehende Kollision mit dem Gegenstand erkennen zu können, kurz bevor die eigentliche Kollision stattfindet. Bei dem Gegenstand kann es sich um einen beliebigen anderen Körper handeln, beispielsweise ein anderes Fahrzeug, eine Fahrbahnbegrenzung oder - zur einfachen Bezeichnung - auch ein Lebewesen wie ein Fußgänger oder ein Tier. Hierzu kann das Fahrzeug über ein Überwachungssystem verfügen, mittels dessen ein Überwachungsbereich vor und ggf. auch neben und/oder hinter dem Fahrzeug überwachbar ist. Bei solchen Systemen kann es sich insbesondere um Sensoren für elektromagnetische Strahlung, beispielsweise Videokameras, Radarsensoren oder auch Laserscanner handeln. Bei Erkennung einer bevorstehenden Kollision können entsprechende Maßnahmen durch ein Sicherheitssystem des Fahrzeugs vorgenommen werden. Beispielsweise könnten Ausweich- oder Bremsmanöver automatisch eingeleitet werden oder es können entsprechende Rückhaltesysteme in dem Fahrzeug ausgelöst werden.

Um hierfür hinreichend Zeit zur Verfügung zu haben, wäre es wünschenswert, möglichst frühzeitig eine Information über eine mögliche Kollision zu erhalten. Jedoch können sich in diesem Zeitraum die Bewegungszustände des Fahrzeugs und/oder des Gegenstands ändern, so dass eine Kollision tatsächlich nicht eintritt. In diesem Fall wäre es daher wenig sinnvoll, Maßnahmen einzuleiten, die nur bei einer tatsächlichen Kollision sinnvoll sind.

Darüber hinaus können auch mehrere relativ zu dem Fahrzeug bewegte Gegenstände auftreten, so dass Kollisionen mit mehreren dieser Gegenstände möglich sind. In diesem Fall wäre es wünschenswert, den Gegenstand mit der größten Kollisionsgefahr bestimmen zu können.

Ein solches Verfahren ist beispielsweise aus der EP 1 245 443 bekannt.

Der vorliegenden Erfindung liegt daher die Aufgabe zugrunde, ein Verfahren und eine Vorrichtung bereitzustellen, mittels derer Informationen über eine möglicherweise bevorstehende Kollision zwischen einem Fahrzeug und einem sich relativ dazu bewegenden Gegenstand bereitgestellt werden können.

Die Aufgabe wird gelöst durch ein Verfahren zur Ermittlung einer Wahrscheinlichkeit für eine Kollision zwischen einem Fahrzeug und einem Gegenstand mit den Merkmalen des Anspruchs 1.

Bei dem erfindungsgemäßen Verfahren zur Ermittlung einer Wahrscheinlichkeit für eine Kollision zwischen einem Fahrzeug und einem Gegenstand auf der Basis von tiefenaufgelösten Bildern eines Überwachungsbereichs in wenigstens einer Ebene, in dem sich der Gegenstand befindet, und einer aktuellen Relativgeschwindigkeit des Gegenstands gegenüber dem Fahrzeug wenigstens in der Ebene werden für den Gegenstand und für das Fahrzeug in einer geschätzten Kollisionslage, die der Gegenstand und das Fahrzeug relativ zueinander bei einer Kollision einnehmen, jeweils eine auf eine Projektionsgerade, die im Wesentlichen orthogonal zu einer geschätzten Relativgeschwindigkeit bei Erreichen der Kollisionslage orientiert ist, projizierte Kontur und deren Lage zueinander ermittelt. Es wird eine Überdeckung der projizierten Konturen ermittelt und in Abhängigkeit von der Überdeckung der beiden projizierten Konturen die Kollisionswahrscheinlichkeit bestimmt.

Die Aufgabe wird weiterhin gelöst durch eine Vorrichtung zur Ermittlung einer Wahrscheinlichkeit für eine Kollision zwischen einem Fahrzeug und einem Gegenstand mit den Merkmalen des Anspruchs 20, mittels derer das erfindungsgemäße Verfahren durchführbar ist.

Die erfindungsgemäße Vorrichtung zur Ermittlung einer Wahrscheinlichkeit für eine Kollision zwischen einem Fahrzeug und einem Gegenstand umfasst einen Sensor für elektromagnetische Strahlung, mittels dessen in zeitlicher Folge tiefenaufgelöste Bilder eines Überwachungsbereichs in wenigstens einer Ebene erfassbar sind, eine Einrichtung zur Ermittlung einer aktuellen Relativgeschwindigkeit zwischen dem Fahrzeug und dem Gegenstand wenigstens in der Ebene, und eine Einrichtung zur Ermittlung der Kollisionswahrscheinlichkeit zwischen dem Fahrzeug und dem Gegenstand auf der Basis wenigstens eines von dem Sensor erfassten, tiefenaufgelösten Bildes und einer von der Einrichtung zur Ermittlung der aktuellen Relativgeschwindigkeit ermittelten aktuellen Relativgeschwindigkeit, die zur Durchführung des erfindungsgemäßen Verfahrens ausgebildet ist.

Unter einem Gegenstand wird zur einfacheren Bezeichnung im Rahmen der vorliegenden Erfindung nicht nur ein beliebiger, in einem ortsfesten Bezugssystem bewegter oder unbewegter, lebloser Gegenstand, beispielsweise ein anderes Fahrzeug, eine Fahrbahnbegrenzung oder eine Ampel, verstanden, sondern auch ein beliebiges Lebewesen, beispielsweise ein Fußgänger oder ein Tier.

Das erfindungsgemäße Verfahren verwendet zur Ermittlung der Kollisionswahrscheinlichkeit tiefenaufgelöste Bilder eines Überwachungsbereichs, die mittels eines, vorzugsweise an dem Fahrzeug befestigten Sensors für elektromagnetische Strahlung erfasst worden sein können.

Grundsätzlich kann der Überwachungsbereich wie auch der zur dessen Überwachung verwendete Sensor dabei ortsfest sein, wobei sich das Fahrzeug dann in dem Überwachungsbereich befindet. Eine mögliche Anwendung besteht dann beispielsweise in der Überwachung eines Kreuzungsbereichs mit einem dort fest installierten Sensor.

Befinden sich in dem Überwachungsbereich mehrere Gegenstände, von denen mehr als einer fahren kann, kann ein beliebiger dieser Gegenstände, die fahren können, als Fahrzeug im Sinne der Erfindung bzw. der Ansprüche behandelt werden, während die anderen Gegenstände als Gegenstände im Sinne der Erfindung bzw. der Ansprüche behandelt werden.

Vorzugsweise wird der Überwachungsbereich mit dem Fahrzeug mitbewegt und umfasst Bereiche vor, neben und/oder hinter dem Fahrzeug. Die Bilder können dann mittels eines an dem Fahrzeug befestigten Sensors für elektromagnetische Strahlung erfasst worden sein.

Die tiefenaufgelösten Bilder können Entfernungsbildpunkte umfassen, die Daten in Bezug auf die Lage von auf einer Oberfläche des Gegenstands und - bei nicht an dem Fahrzeug gehaltenem Sensor - auch des Fahrzeugs in der Ebene erfassten Gegenstandspunkten und insbesondere einen Abstand von dem zur Erfassung der tiefenaufgelösten Bilder verwendeten Sensor in der Ebene beinhalten. Je nach verwendetem Sensor können selbstverständlich auch tiefenaufgelöste Bilder verwendet werden, die Entfernungsbildpunkte in mehreren beispielsweise fächerartig angeordneten Ebenen enthalten. Die Ebene oder die Ebenen sind dabei nicht orthogonal zu einer Blickrichtung des Sensors orientiert.

Die tiefenaufgelösten Bilder können dabei insbesondere in im Wesentlichen konstanten Zeitabständen erfasst sein.

Bei der erfindungsgemäßen Vorrichtung ist hierfür ein Sensor für elektromagnetische Strahlung, insbesondere optische Strahlung, vorgesehen, mittels dessen in zeitlicher Folge tiefenaufgelöste Bilder des Überwachungsbereichs in der wenigstens einen Ebene erfassbar sind. Je nach Verwendung ist der Sensor dabei - beispielsweise zur Überwachung eines Kreuzungsbereichs - ortsfest oder - beispielsweise zur Überwachung eine Bereichs vor, neben und/oder hinter dem Fahrzeug - an dem Fahrzeug selbst befestigt. Der Sensor erfasst dabei Gegenstandspunkte auf dem Gegenstand und gegebenenfalls auf dem Fahrzeug, bei denen es sich je nach räumlichem Auflösungsvermögen des Sensors um mehr oder weniger große Bereiche auf einer Oberfläche des Gegenstands bzw. des Fahrzeugs handeln kann. Der Sensor ermittelt dann für die erfassten Gegenstandspunkte jeweils Lagedaten relativ zu dem Sensor, die insbesondere einen Abstand des Gegenstandspunkts von dem Sensor oder einem relativ zu diesem fixen Referenzpunkt in der Ebene umfassen.

Zur Identifikation des Gegenstands und - bei Verwendung eines nicht an dem Fahrzeug gehaltenen Sensors - gegebenenfalls des Fahrzeugs in den tiefenaufgelösten Bildern kann insbesondere eine Objekterkennung und/oder -verfolgung auf der Basis der tiefenaufgelösten Bilder erfolgen, die dann vorzugsweise in einer vorgegebenen zeitlichen Folge erfasst sind.

Weiterhin wird bei dem erfindungsgemäßen Verfahren eine aktuelle Relativgeschwindigkeit des Gegenstands gegenüber dem Fahrzeug wenigstens in der Ebene, in der die Gegenstandspunkte erfasst werden, verwendet. Unter der Relativgeschwindigkeit wird dabei die Geschwindigkeit wenigstens in der Ebene verstanden, die insbesondere einen als zweidimensionaler Vektor in der Ebene darstellbaren Anteil umfassen oder nur aus diesem bestehen kann. Die Relativgeschwindigkeit kann daher insbesondere sowohl einen Radialanteil als auch einen Azimutalanteil in Bezug auf den Sensor bzw. - bei Montage an dem Fahrzeug - Komponenten sowohl in Fahrtrichtung des Fahrzeug als auch quer dazu umfassen. Die Relativgeschwindigkeit kann dabei insbesondere durch die Relativgeschwindigkeit von Referenzpunkten für das Fahrzeug und den Gegenstand gegeben sein, die jeweils fix gegenüber dem Fahrzeug bzw. dem Gegenstand, aber sonst beliebig gewählt sein können.

Zur Erfassung der aktuellen Relativgeschwindigkeit ist bei der erfindungsgemäßen Vorrichtung die Einrichtung zur Ermittlung einer aktuellen Relativgeschwindigkeit zwischen dem Fahrzeug und dem Gegenstand wenigstens in der Ebene vorgesehen.

Die Überdeckung wird in einer geschätzten Kollisionslage ermittelt, die der Gegenstand und das Fahrzeug relativ zueinander bei einer Kollision einnehmen. Hierzu können Annahmen über den zukünftigen Verlauf der Bahn des Gegenstands und/oder des Fahrzeugs zueinander bzw. der Relativgeschwindigkeit bis zur Kollision getroffen werden. Damit ergibt sich auch zumindest die Richtung einer entsprechenden geschätzten Relativgeschwindigkeit bei Erreichen der geschätzten Kollisionslage. Die Annahmen können sich darin äußern, dass bei dem Verfahren Modelle bzw. kinematische Beziehungen verwendet werden, die die Geltung dieser Annahmen voraussetzen, es brauchen jedoch keine expliziten Verfahrensschritte zur Ermittlung der geschätzten Kollisionslage durchgeführt zu werden.

Für den Gegenstand und für das Fahrzeug werden dann in der geschätzten Kollisionslage auf eine Projektionsgerade, die im Wesentlichen orthogonal zu der geschätzten Relativgeschwindigkeit bei Erreichen der Kollisionslage orientiert ist, projizierte Konturen und deren Lage zueinander ermittelt. Unter der Kontur wird dabei im Sinne der Erfindung eine Gruppe von Konturpunkten verstanden, die einen Umriss des Gegenstands bzw. des Fahrzeugs in der Ebene wenigstens teilweise und wenigstens näherungsweise wiedergeben. Dies beinhaltet auch eine Darstellung durch vorgegebene in ihrer Lage und Größe parametrisierte geometrische Figuren, die die Kontur wiedergeben. Die Kontur braucht dabei insbesondere nur einen von einem Sensor zur Erfassung der tiefenaufgelösten Bilder erfassbaren Abschnitt der Kontur, nicht aber den durch den Gegenstand bzw. das Fahrzeug oder einen anderen Gegenstand verdeckten Abschnitt zu umfassen.

Ist der Sensor zur Erfassung der tiefenaufgelösten Bilder an dem Fahrzeug gehalten, können die Konturpunkte des Fahrzeugs durch eine Gruppe von Lagekoordinaten in der Ebene umfassende Punkten gegeben sein, deren Lage bzw. Lagekoordinaten in Abhängigkeit von der Form des Fahrzeugs bestimmt sind. Insbesondere können sie vorab bestimmt und zur Durchführung des Verfahrens gespeichert sein. Vorzugsweise kann die Kontur durch die Eckpunkte eines das Fahrzeug umschreibenden Rechtecks minimaler Fläche gegeben sein. Ist der Sensor dagegen nicht an dem Fahrzeug gehalten und wird das Fahrzeug von dem Sensor erfasst, kann die Kontur wie bei dem Gegenstand gegeben sein.

Für den Gegenstand wird die Kontur auf der Basis der tiefenaufgelösten Bilder ermittelt, wobei die Konturpunkte durch eine Gruppe von Entfernungsbildpunkten in dem tiefenaufgelösten Bild oder aus solchen Entfernungsbildpunkten ermittelte Punkte gegeben sein können. Diese Kontur kann insbesondere unter Verwendung einer Objektverfolgung ermittelt werden, bei der Entfernungsbildpunkte einem Objekt, das dem Gegenstand entspricht, zugeordnet werden. Grundsätzlich können für diese Zuordnung Objektverfolgungsverfahren verwendet werden, bei denen die tiefenaufgelösten Bilder zunächst segmentiert werden, woraufhin dann die Segmente bereits bestehenden oder neu zu bildenden Objekten zugeordnet werden. Ein solches Verfahren ist zum Beispiel in den Proceedings der Tagung IFAC 2000, Braunschweig, Deutschland, in dem Beitrag von Ewald, A. und Willhoeft, V.: "Object Detection with Laser Scanners for Automotive Applications" beschrieben. Es ist jedoch auch möglich, ein Objektverfolgungsverfahren zu verwenden, bei dem auf die Bildung von Segmenten verzichtet wird, und stattdessen eine Verfolgung anhand von Konturen erfolgt. Ein solches Verfahren ist beispielsweise in der deutschen Patentanmeldung der Anmelderin mit dem amtlichen Aktenzeichen DE 102 58 794 beschrieben. Ist der Sensor nicht an dem Fahrzeug gehalten, kann die Kontur des Fahrzeugs wie die des Gegenstands gegeben sein.

Für das erfindungsgemäße Verfahren genügt es grundsätzlich, nur die auf die Projektionsrichtung projizierten Konturen und deren Lage zueinander zu ermitteln. Da eine projizierte Kontur somit nur einer gerade Strecke entspricht, kann die Größe und Lage der projizierten Kontur allein durch die Lage der beide Endpunkte der Strecke auf der Projektionsgeraden gegeben sein.

In einem folgenden Schritt wird dann eine Überdeckung der projizierten Konturen ermittelt, in dem die Breite eines Überdeckungs- bzw. Überschneidungsbereichs von beiden projizierten Konturen auf der Projektionsgeraden ermittelt wird.

In Abhängigkeit von der so ermittelten Überdeckung wird dann die Kollisionswahrscheinlichkeit bestimmt, wobei zum einen eine Normierung stattfinden kann und zum anderen noch weitere Größen in die Bestimmung des Wertes der Kollisionswahrscheinlichkeit eingehen können. Dabei kann die Kollisionswahrscheinlichkeit vorzugsweise mit zunehmender Überdeckung zunehmen.

Die so ermittelte Kollisionswahrscheinlichkeit kann dann gegebenenfalls zusammen mit der geschätzten Dauer bis zur Kollision ausgegeben oder zur weiteren Verwendung gespeichert werden.

Werden mehrere Gegenstände erfasst, können diese Daten für jeden der Gegenstände ausgeben werden, wobei insbesondere eine Priorisierung entsprechend der Kollisionswahrscheinlichkeit und/oder der geschätzten Dauer bis zur Kollision erfolgen kann.

Zur Durchführung dieser Verfahrensschritte verfügt die erfindungsgemäße Vorrichtung über die Einrichtung zur Ermittlung der Kollisionswahrscheinlichkeit zwischen dem Fahrzeug und dem Gegenstand, die insbesondere einen Mikroprozessor, vorzugsweise einen digitalen Signalprozessor, der entsprechend programmiert ist, und einen zugehörigen Speicher sowie Schnittstellen zu dem Sensor und der Einrichtung zur Ermittlung der aktuellen Relativgeschwindigkeit umfassen kann.

Durch Berücksichtigung der Überdeckung bei der Ermittlung der Kollisionswahrscheinlichkeit kann sehr einfach, aber sehr effektiv eine differenzierte Schätzung für das Auftreten einer Kollision gegeben werden. Dies ermöglicht es, sehr differenziert auf verschiedene Fahrsituationen zu reagieren.

Dabei gestattet es die Erfindung, die Überdeckung in der für eine Kollision besonders relevanten Richtung orthogonal zur der Relativgeschwindigkeit zu ermitteln und zur Bestimmung der Kollisionswahrscheinlichkeit zu verwenden.

Weiterbildungen und bevorzugte Ausführungsformen der Erfindung sind in der Beschreibung, den Ansprüchen und den Zeichnungen beschrieben.

Grundsätzlich kann die erfindungsgemäße Vorrichtung beliebige Sensoren für elektromagnetische Strahlung zur Erfassung von tiefenaufgelösten Bildern aufweisen. Beispielsweise können Stereo-Videokameras verwendet werden, deren Daten zur Bildung eines dreidimensionalen Bildes zusammengeführt werden, das in einer Ebene ein tiefenaufgelöstes Bild enthält. Darüber hinaus ist auch die Verwendung von bildgebenden Radarsensoren denkbar. Zur Erzielung einer besonders guten und genauen Ortsauflösung ist es jedoch bevorzugt, dass der Sensor für elektromagnetische Strahlung einen Laserscanner umfasst. Bei diesem Laserscanner kann es sich insbesondere um einen Laserscanner handeln, bei dem ein gepulster Abtastlaserstrahl in wenigstens einer Abtastebene über den Überwachungsbereich geschwenkt und aus dem Überwachungsbereich zurückgeworfene Abtastlaserstrahlung zeitaufgelöst erfasst wird. Aus der Laufzeit der Abtastlaserpulse zwischen dem Laserscanner, einem Punkt eines Gegenstands, der den Abtaststrahl wenigstens teilweise zurückwirft, und Empfangselement des Laserscanners zur Detektion der zurückgeworfene Abtastlaserstrahlungspulse kann dann der Abstand des Gegenstandspunkts bei dem gegebenen Schwenkwinkel und damit die Lage des Gegenstandspunkts in der Abtastebene ermittelt werden. Solche Laserscanner zeichnen sich durch einen großen Überwachungsbereich bei gleichzeitiger guter Ortsauflösung und geringen Messfehlern aus.

Die aktuelle Relativgeschwindigkeit kann grundsätzlich auf verschiedene Art und Weise ermittelt werden. Bei einer Ausführungsform des Verfahrens ist es bevorzugt, dass die erfindungsgemäße Vorrichtung hierzu wenigstens einen Radarsensor umfasst, mit dem wenigstens Radialgeschwindigkeiten zwischen dem Fahrzeug und dem Gegenstand erfassbar sind. Es ist jedoch bei dem erfindungsgemäßen Verfahren bevorzugt, dass die aktuelle Relativgeschwindigkeit auf der Basis der tiefenaufgelösten Bilder mittels einer Objekt-Verfolgung oder einer Verfolgung von Gegenstandspunkten auf dem Gegenstand ermittelt wird. Bei einer Objekt-Verfolgung kann hierbei beispielsweise eines der oben genannten Verfahren verwendet werden. Zur Verfolgung von einzelnen Gegenstandspunkten bzw. -bereichen kann beispielsweise ein Verfolgungsverfahren verwendet werden, das in der deutschen Patentanmeldung der Anmelderin mit dem amtlichen Aktenzeichen DE 103 12 249 offenbart ist. Die aktuelle Relativgeschwindigkeit kann beispielsweise bei bekannter Dauer zwischen zwei Zyklen des Objektverfolgungsverfahrens aus der Änderung der gemessenen Lage des Gegenstands in dem aktuellen Zyklus und einem vorhergehenden Zyklus des Objektverfolgungsverfahrens ermittelt werden. Da für die Zuordnung von Entfernungsbildpunkten zu Objekten zur Ermittlung der Kontur eine Objektverfolgung ohnehin vorgesehen sein kann, kann eine solche Bestimmung der aktuellen Relativgeschwindigkeit mit sehr geringem apparativem Aufwand erfolgen. Bei der erfindungsgemäßen Vorrichtung können dann insbesondere die Einrichtung zur Ermittlung einer aktuellen Relativgeschwindigkeit und die Einrichtung zur Ermittlung der Kollisionswahrscheinlichkeit zusammengefasst sein, wobei vorzugsweise ein entsprechendes Programm mit entsprechenden Programmmodulen auf nur einem Prozessor ausgeführt werden kann. Ist der Sensor nicht an dem Fahrzeug gehalten, kann zur Ermittlung der Relativgeschwindigkeit auch für das Fahrzeug analog eine Objekt-Verfolgung oder eine Verfolgung von Gegenstands- bzw. Fahrzeugpunkten auf dem Fahrzeug erfolgen.

Bei der erfindungsgemäßen Vorrichtung ist es bevorzugt, dass die Einrichtung zur Ermittlung einer Kollisionswahrscheinlichkeit Mittel zur Ermittlung einer auf eine Projektionsgerade projizierten Kontur für den Gegenstand und für das Fahrzeug in einer geschätzten Kollisionslage und deren Lage zueinander, Mittel zur Ermittlung einer Überdeckung der projizierten Konturen und Mittel zur Bestimmung der Kollisionswahrscheinlichkeit in Abhängigkeit von der Überdeckung der beiden projizierten Konturen aufweist, wobei die Projektionsgerade im Wesentlichen orthogonal zu einer geschätzten Relativgeschwindigkeit bei Erreichen der geschätzten Kollisionslage, die der Gegenstand und das Fahrzeug bei der Kollision relativ zueinander einnehmen, orientiert ist. Teile dieser Einrichtungen können durch analoge und/oder digitale Schaltungen realisiert sein, es ist jedoch bevorzugt, dass hierzu ein programmierbarer Prozessor verwendet wird, der ein in einem zugehörigen Speicher gespeichertes Programm zur Durchführung des erfindungsgemäßen Verfahrens abarbeitet.

Grundsätzlich kann bei dem erfindungsgemäßen Verfahren eine Überdeckung auch für sehr weit von dem Fahrzeug entfernte Gegenstände ermittelt werden. Beachtet man, dass für diese Gegenstände in der Regel die Dauer bis zu einer Kollision sehr groß im Vergleich zu den typischen Zeiten ist, während derer sich der Bewegungszustand des Fahrzeugs und/oder des Gegenstands verändern kann, ist eine allein auf der Basis der Überdeckung berechnete Kollisionswahrscheinlichkeit unter Umständen nicht sehr aussagekräftig. Es ist daher bevorzugt, dass eine Schätzung für die Dauer bis zu einer Kollision zwischen dem Fahrzeug und dem Gegenstand ermittelt wird, und dass die Kollisionswahrscheinlichkeit auch in Abhängigkeit von der der geschätzten Dauer bis zu einer Kollision ermittelt wird. Die Schätzung kann dabei insbesondere auf der Basis der Entfernungsbildpunkte in wenigstens einem tiefenaufgelösten Bild und wenigstens der aktuellen Relativgeschwindigkeit des Gegenstands gegenüber dem Fahrzeug ermittelt werden. Da die zukünftige Bahn des Gegenstands und/oder des Fahrzeugs nach der Erfassung des letzten tiefenaufgelösten Bildes und der aktuellen Relativgeschwindigkeit nicht bekannt sind, kann die Schätzung nur vorläufig sein und beinhaltet insbesondere Annahmen über den weiteren Verlauf dieser Bahnen relativ zueinander bzw. die zeitliche Entwicklung der Relativgeschwindigkeit, bei denen es sich um die gleichen handeln kann, die bei der Ermittlung der Überdeckung verwendet werden. Darüber hinaus kann zur Schätzung der Dauer ein Abstand zwischen dem Fahrzeug und dem Gegenstand verwendet werden, der insbesondere aus den tiefenaufgelösten Bildern ermittelt werden kann. Die Kollisionswahrscheinlichkeit kann dabei direkt oder mittelbar über eine Abhängigkeit der Überdeckung von der geschätzten Dauer bis zur Kollision abhängen.

Die geschätzte Dauer bis zu einer Kollision kann auch in der erfindungsgemäßen Weise unabhängig von einer Verwendung im Zusammenhang mit Kollisionswahrscheinlichkeiten und/oder Überdeckungen ermittelt und zur weiteren Verwendung durch andere Anwendungen gespeichert oder ausgegeben werden, um beispielsweise eine Priorisierung entsprechend der zeitlichen Reihenfolge zu erwartender Kollisionen vornehmen zu können.

Weiterhin ist auch Gegenstand der Erfindung ein erfindungsgemäßes Verfahren, bei dem statt der Überdeckung andere von den Lagedaten für den Gegenstand relativ zu dem Fahrzeug in dem tiefenaufgelösten Bild abhängige Größen zusammen mit der Dauer bis zu einer Kollision verwendet werden.

Die Kollisionswahrscheinlichkeit kann insbesondere durch eine Summe oder - vorzugsweise - durch ein Produkt von Termen gegeben sein, von denen einer von der Überdeckung und der andere von der geschätzten Dauer bis zur Kollision abhängt. Insbesondere bei einer Produktform kann sich eine einfach zu normierende und wahrscheinlichkeitstheoretisch einfach zu interpretierende funktionale Form für die Kollisionswahrscheinlichkeit ergeben. Die Kollisionswahrscheinlichkeit kann vorzugsweise für eine gegebene Überdeckung eine monoton fallende Funktion der geschätzten Dauer bis zu einer Kollision sein, d.h. mit zunehmender geschätzter Dauer bis zu einer Kollision nicht zunehmen.

Für sehr große geschätzte Dauern bis zur Kollision wird die Kollisionswahrscheinlichkeit sehr klein werden, da Gegenstand und/oder Fahrzeug unabhängig voneinander ihre Bewegungsrichtung ändern können. Daher ist es besonders bevorzugt, dass eine Kollisionswahrscheinlichkeit nicht ermittelt und/oder auf Null gesetzt wird, wenn die geschätzte Dauer bis zur Kollision einen vorgegebenen Schwellwert überschreitet. Dieser Schwellwert kann insbesondere in Abhängigkeit von der zu erwartenden Dynamik des Fahrzeugs und der in der Umgebung auftretenden Gegenstände bestimmt werden. Vorzugsweise wird ein Schwellwert zwischen ca. 50 ms und 1 s gewählt. Auf diese Weise kann insbesondere der Verarbeitungsaufwand zur Ermittlung der Kollisionswahrscheinlichkeit reduziert werden, da diese nur für relevant erscheinende Objekte ermittelt wird.

Die Kollisionswahrscheinlichkeit kann vorgegebene Parameter umfassen, die von den Eigenschaften des Gegenstands und/oder des Fahrzeugs abhängen, nicht aber die aktuellen kinematischen Daten wie Lage und/oder Geschwindigkeit betreffen. Es ist dann bevorzugt, dass wenigstens ein Parameter zur Ermittlung der Kollisionswahrscheinlichkeit spezifisch für den Gegenstand und/oder das Fahrzeug gewählt wird. Hiermit wird eine spezifischere und damit genauere Ermittlung der Kollisionswahrscheinlichkeit ermöglicht. Wird im Rahmen einer Objektverfolgung eine Objektklassifikation verwendet, kann der Parameter besonders bevorzugt objektklassenabhängig gewählt werden. Dies erlaubt eine einfache Zuordnung von geeigneten Werten zu dem Parameter. Wird eine Summenoder Produktdarstellung für eine von der Überdeckung und der Dauer bis zur Kollision abhängige Kollisionswahrscheinlichkeit verwendet, kann der gegenstands- und/oder fahrzeugspezifisch gewählte Parameter insbesondere zur Berechnung des die Dauer bis zur Kollision enthaltenden Beitrags bzw. Faktors verwendet werden. Dieser Parameter kann insbesondere in Abhängigkeit davon gewählt sein, wie wahrscheinlich sich in Abhängigkeit von den Gegenstands- und/oder Fahrzeugeigenschaften der Bewegungszustand des Gegenstands und/oder des Fahrzeugs in einem vorgegebenen Zeitintervall verändern.

Zur vorläufigen Schätzung der Dauer bis zu einer Kollision zwischen dem Fahrzeug und dem Gegenstand ist es notwendig, Annahmen über den weiteren Verlauf der Bahnen des Fahrzeugs und des Gegenstands wenigstens relativ zueinander zu treffen. Grundsätzlich kann dabei eine bei der Objektverfolgung ermittelte Bahn des Gegenstands relativ zu dem Fahrzeug extrapoliert werden. Eine solche Extrapolation ist jedoch für gekrümmte Bahnen relativ aufwändig, insbesondere wenn sie eine Drehung des Gegenstands um seinen Schwerpunkt mit berücksichtigt. Es ist daher bei dem erfindungsgemäßen Verfahren bevorzugt, dass zur Schätzung der Dauer bis zu einer Kollision ein Modell für eine lineare Relativbewegung von Gegenstand und Fahrzeug verwendet wird. Diese das erfindungsgemäße Verfahren wesentlich vereinfachende Annahme ergibt in der Praxis im Vergleich zum Aufwand sehr gute Resultate, was nicht zuletzt darauf zurückzuführen ist, dass die Kollisionswahrscheinlichkeit häufig nur für solche Gegenstände ermittelt wird, deren Dauer bis zur Kollision mit dem Fahrzeug sehr kurz ist, so dass deren Bahn sehr gut durch eine Gerade approximiert werden kann. Als Modell kann dabei insbesondere eine entsprechende kinematische Beziehung für eine geradlinige Bewegung verwendet werden.

Dabei ist es besonders bevorzugt, dass zur Schätzung der Dauer bis zu einer Kollision ein Modell für eine Relativbewegung mit der aktuellen Relativgeschwindigkeit verwendet wird. Dies bedeutet, dass angenommen wird, dass sich während der Dauer bis zur Kollision in guter Näherung Gegenstand und Fahrzeug relativ zueinander unbeschleunigt bewegen, d.h. weder gebremst noch beschleunigt werden. Auch für diese Näherung gilt, dass sie in Anbetracht der Zeiten, für die die Ermittlung einer Kollisionswahrscheinlichkeit überhaupt relevant erscheint, im Vergleich zum Aufwand sehr gute Ergebnisse ergibt.

Dabei ist es besonders bevorzugt, dass zur Schätzung der Dauer bis zu einer Kollision ein Radialanteil der Relativgeschwindigkeit verwendet wird, der durch Projektion der Relativgeschwindigkeit auf eine Gerade durch einen Referenzpunkt für den Gegenstand und einen Referenzpunkt für das Fahrzeug erhältlich ist. Bei dem Referenzpunkt für das Fahrzeug, der relativ zu diesem festgelegt ist, kann es sich beispielsweise um dessen geometrischen Schwerpunkt oder bevorzugt den Koordinatenursprung eines Fahrzeugkoordinatensystems handeln. Als Referenzpunkt für den Gegenstand kann beispielsweise dessen geometrischen Schwerpunkt verwendet werden, dessen Lage durch die des geometrischen Schwerpunkt eines entsprechenden Objekts bei der Objektverfolgung gegeben sein kann. Dieser liegt jedoch in der Regel innerhalb der Kontur des Gegenstands und würde daher zu einem zu großen Wert für den Abstand zwischen dem Fahrzeug und dem Gegenstand führen. Es ist daher besonders bevorzugt, dass zur Schätzung der Dauer bis zu einer Kollision zur Bestimmung des Abstands zwischen dem Gegenstand und dem Fahrzeug als Referenzpunkt des Gegenstands der Konturpunkt einer dem Gegenstand entsprechenden Kontur verwendet wird, der von einem Referenzpunkt des Fahrzeugs den geringsten Abstand aufweist. Auf diese Weise wird eine besonders genaue Schätzung für die Dauer bis zu einer Kollision erzielt. Diese ist noch verbesserbar, wenn in dem Fall, dass als Referenzpunkt des Fahrzeugs ein Koordinatenursprung des Fahrzeugkoordinatensystems verwendet wird, der Abstand um einen konstanten Wert reduziert wird, der etwa dem mittleren Abstand des meist im Inneren der Fahrzeugkontur liegenden Koordinatenursprungs zu der Kontur des Fahrzeugs entspricht. Entsprechend kann bevorzugt als Referenzpunkt des Fahrzeugs auch dessen Konturpunkt verwendet werden, der den geringsten Abstand von dem Referenzpunkt des Gegenstands aufweist.

Alternativ ist es bevorzugt, dass zur Schätzung der Dauer bis zu einer Kollision für Konturpunkte der Kontur des Gegenstands jeweils eine konturpunktspezifische Dauer bis zur Kollision ermittelt wird, und dass als geschätzte Dauer bis zu einer Kollision die geringste der ermittelten konturpunktspezifischen Dauern bis zur Kollision verwendet wird. Ist nur ein Konturpunkt verfügbar, wird nur für diesen die Dauer bis zur Kollision ermittelt. Ist mehr als ein Konturpunkt verfügbar, werden die konturpunktspezifischen Dauern bis zur Kollision vorzugsweise für wenigstens zwei Konturpunkte ermittelt. Hierdurch kann die Qualität der Schätzung wesentlich verbessert werden, da auch unregelmäßige Konturen differenzierter erfasst werden können. Die Schätzung der konturpunktspezifischen Dauern bis zu einer Kollision kann dabei insbesondere jeweils mit den zuvor erwähnten Weiterbildungen des erfindungsgemäßen Verfahrens in Bezug auf die Schätzung der Dauer bis zur Kollision erfolgen. Insbesondere können die Konturpunkte jeweils als Referenzpunkte verwendet werden, die zur Abstandsermittlung und/oder zur Festlegung der zur Ermittlung der Radialgeschwindigkeit verwendeten Gerade verwendet werden. Es ist daher besonders bevorzugt, dass zur Schätzung der konturpunktspezifischen Dauer bis zu einer Kollision ein Radialanteil der Relativgeschwindigkeit verwendet wird, der durch Projektion der Relativgeschwindigkeit auf eine Gerade durch den Konturpunkt der Kontur des Gegenstands und einen Referenzpunkt für das Fahrzeug erhältlich ist. Es können dabei alle Konturpunkte einer Kontur verwendet werden, vorzugsweise wird jedoch, um die Verarbeitungsgeschwindigkeit zu erhöhen, eine vorzugsweise repräsentative Auswahl getroffen, die vorzugsweise jeweils wenigstens die End- und/oder Eckpunkte einer Kontur umfasst.

Vorzugsweise können auch zur Schätzung der Dauer bis zu einer Kollision alle vom Gegenstand verfügbaren Konturinformationen und/oder Referenzpunkte genutzt werden, indem die Kollisionsdauer des Konturpunkts mit der niedrigsten Dauer bis zur Kollision als geschätzte Dauer bis zur Kollision für den Gegenstand oder das dem Gegenstand entsprechende Objekt in einer Objektverfolgung verwendet wird.

Die geschätzte Dauer bis zu einer Kollision kann sehr kurz sein. Bei der Verwendung der geschätzten Dauer sollten daher durch die Verarbeitung bedingte Latenzzeiten berücksichtigt werden. Es ist daher bevorzugt, dass die geschätzte Dauer bis zu einer Kollision vor einer Ausgabe oder Speicherung in Bezug auf eine Zeitdifferenz zwischen einem Erfassungszeitpunkt der dem tiefenaufgelösten Bild zugrunde liegenden Daten und der aktuellen Zeit korrigiert wird.

Zur Ermittlung der geschätzten, projizierten Konturen und deren Lage zueinander sowie der sich daraus ergebenden Überdeckung ist es notwendig, Annahmen über den weiteren Verlauf der Bahn des Fahrzeugs und/oder des Gegenstands zu treffen. Grundsätzlich kann hier, wie auch bei der Schätzung der Dauer bis zu einer Kollision, eine Bahn unter Verwendung vorhergehender Lagen des Gegenstands relativ zu dem Fahrzeug und/oder unter Verwendung bereits in vorhergehenden Zyklen bestimmter Überdeckungen durch Extrapolation ermittelt werden. In Anbetracht der nur kurzen Zeiträume, für die eine Verwendung einer Kollisionswahrscheinlichkeit sinnvoll erscheint, ist es jedoch bevorzugt, dass zur Ermittlung der geschätzten, projizierten Konturen und deren Lage zueinander als Richtung der geschätzten Relativgeschwindigkeit bei Erreichen der geschätzten Kollisionslage die Richtung der aktuellen Relativgeschwindigkeit verwendet wird. Dies bedeutet die Annahme einer geradlinigen Bewegung des Gegenstands relativ zu dem Fahrzeug und erlaubt eine besonders einfache Ermittlung der projizierten Kontur, da die Projektionsgerade dann in Bezug auf die aktuelle Relativgeschwindigkeit gegeben ist. Weiterhin ist durch diese Annahme zumindest zur Ermittlung der Überdeckung die Schätzung einer Dauer bis zu einer Kollision nicht notwendig. Dabei kann insbesondere auch der Betrag der geschätzten Relativgeschwindigkeit dem Betrag der aktuellen Relativgeschwindigkeit entsprechen, so dass im Ergebnis eine geradlinig gleichförmige Relativbewegung zwischen Fahrzeug und Gegenstand angenommen wird. Diese Annahmen über die Relativbewegung von dem aktuellen Zeitpunkt über die Dauer bis zu einer Kollision schlagen sich bei dem erfindungsgemäßen Verfahren beispielsweise in der Verwendung entsprechender Modellbeziehungen nieder.

Die projizierten Konturen des Gegenstands und des Fahrzeugs können auf verschiedene Art und Weise ermittelt werden. Insbesondere können beispielsweise alle Konturpunkte einer Kontur einzeln auf die Projektionsgerade projiziert werden. Es ist jedoch bevorzugt, dass alle Konturpunkte der Kontur für den Gegenstand in einer Reihenfolge auf- oder absteigender Polarwinkel in einem Koordinatensystem in der Ebene des Überwachungsbereichs geordnet sind, und dass zur Ermittlung der auf die Projektionsgeraden projizierten Kontur des Gegenstands nur der erste und der letzte der geordneten Konturpunkte der Kontur für den Gegenstand verwendet werden. Es ist dann nicht unbedingt notwendig, alle Konturpunkte auf die Projektionsgerade zu projizieren. Der Ursprung des Koordinatensystems kann dabei durch den Ursprung eines Koordinatensystems eines zur Erfassung der tiefenaufgelösten Bilder oder vorzugsweise - bei Befestigung eines die tiefenaufgelösten Bilder erfassenden Sensors an dem Fahrzeug - durch einen Ursprung in einem Referenzpunkt des Fahrzeugs gegeben sein. Diese Weiterbildung bietet sich besonders bei Verwendung von tiefenaufgelösten Bildern an, in denen Entfernungsbildpunkte Lagedaten in Polarkoordinaten enthalten, die in zunehmender oder abnehmender Reihenfolge des Polarwinkels geordnet sind, wobei der Koordinatenursprung des Polarkoordinatensystem im Bereich des die tiefenaufgelösten Bilder erfassenden Sensors und/oder des Fahrzeugs angeordnet ist.

Eine solche Anordnung der Entfernungsbildpunkte kann insbesondere bei Verwendung von Laserscannern ohne wesentlichen Aufwand erhalten werden, wenn diese den Überwachungsbereich durch Schwenken eines gepulsten Abtastlaserstrahls abtasten. Auf diese Weise kann die projizierte Kontur sehr einfach und schnell ohne erhebliche Rechen- bzw. Rundungsfehler ermittelt werden. Ist der Sensor nicht an dem Fahrzeug gehalten, sondern ortsfest, ist es besonders bevorzugt, dass auch alle Konturpunkte der Kontur für das Fahrzeug in einer Reihenfolge auf- oder absteigender Polarwinkel in einem Koordinatensystem in der Ebene des Überwachungsbereichs geordnet sind, und dass zur Ermittlung der auf die Projektionsgeraden projizierten Kontur des Fahrzeugs nur der erste und der letzte der geordneten Konturpunkte der Kontur für das Fahrzeug verwendet werden.

Die in dem Entfernungsbild erfasste Kontur eines Gegenstands betrifft nur die Lage und Ausdehnung in der Erfassungsebene. Grundsätzlich können jedoch Teile des Gegenstands in anderen Ebenen über diese Kontur herausragen. Dieser Fall kann beispielsweise auftreten, wenn der Gegenstand ein Lastkraftwagen ist, der eine sehr unregelmäßige Kontur hat, die gegebenenfalls unterhalb einer Ladefläche des Lastkraftwagens verläuft. Um solche Unsicherheiten wie auch Messungenauigkeiten des zur Erfassung des tiefenaufgelösten Bildes verwendeten Sensors berücksichtigen zu können, ist es bevorzugt, dass wenigstens eine der Konturen oder eine der projizierten Konturen, vorzugsweise die des Gegenstands, vor dem Ermitteln der Überdeckung mit einem Skalierungsfaktor vergrößert wird. Die Lage der Kontur bzw. der projizierten Kontur, gegeben durch deren geometrischen Schwerpunkt, bleibt dabei unverändert. Der Skalierungsfaktor kann, wenn bei der Objektverfolgung eine Objektklassifizierung durchgeführt wurde, insbesondere auch in Abhängigkeit von der Objektklasse, der das Objekt zugeordnet ist, abhängen. So können beispielsweise für Lastkraftwagen größere Skalierungsfaktoren verwendet werden, als für Personenkraftwagen, die eine gleichmäßigere Form aufweisen. Darüber hinaus kann der Skalierungsfaktor auch von einer zu erwartenden Dynamik der Gegenstände entweder auf der Basis der erwähnten Klassifizierung oder auch einer bei der Objektverfolgung festgestellten Dynamik gewählt sein. Schließlich kann in den Skalierungsfaktor, wie bereits erwähnt, auch die Messgenauigkeit des zur Erfassung der tiefenaufgelösten Bilder verwendeten Sensors eingehen. Der Skalierungsfaktor kann dabei insbesondere Werte zwischen 1,001 und 1,4 annehmen.

Die Kollisionswahrscheinlichkeit kann bevorzugt eine monotone Funktion der Überdeckung sein.

In einer einfachen Variante des erfindungsgemäßen Verfahrens wird von einer verschwindenden Kollisionswahrscheinlichkeit ausgegangen, wenn auch die Überdeckung Null ist. Um jedoch auch eine Kollisionsgefahr erfassen zu können, die beispielsweise durch einen sehr geringen seitlichen Abstand des Fahrzeugs von einem relativ dazu bewegten Gegenstand, beispielsweise einem nahe vorbeifahrenden anderen Fahrzeug, entstehen kann, ist es bei dem erfindungsgemäßen Verfahren bevorzugt, dass bei nicht vorhandener Überdeckung die Kollisionswahrscheinlichkeit in Abhängigkeit von einem Abstand zwischen den projizierten Konturen für den Gegenstand und für das Fahrzeug bestimmt wird. Der Abstand wird dabei entlang der Projektionsgeraden ermittelt. Auf diese Weise kann sehr einfach auch eine Kollisionswahrscheinlichkeit ermittelt werden, wenn das Fahrzeug und der Gegenstand bei Fortsetzung ihrer normalen Bahn nicht kollidieren würden, dies jedoch bei nur kleinen Änderungen der Bahn möglich wird.

In einigen Situationen ist es nicht sinnvoll, Kollisionswahrscheinlichkeiten zu ermitteln. Beispielsweise ist zwar beim Einparken eine Kollisionsgefahr gegeben, doch kann mit großer Sicherheit angenommen werden, dass der Fahrer eine Kollisionsgefahr erkennt und dementsprechend handelt. Es ist daher bevorzugt, dass die Kollisionswahrscheinlichkeit mit einem nichtverschwindenden Wert nur ermittelt wird, wenn das Fahrzeug eine Geschwindigkeit aufweist, die größer ist als eine vorgegebene Mindestgeschwindigkeit. Je nach Anforderungen eines Systems, das die Kollisionswahrscheinlichkeiten verarbeitet, kann bei Unterschreiten der Mindestgeschwindigkeit die Ermittlung der Kollisionswahrscheinlich vollständig unterdrückt sein oder es können Kollisionswahrscheinlichkeiten mit Wert Null ausgegeben werden. Diese vorgeschriebene Mindestgeschwindigkeit kann insbesondere in einem Bereich zwischen dem Stillstand und/oder 15 km/Std. liegen. Damit wird beispielsweise bei langsamem Rangieren auf einem Parkplatz, beispielsweise beim Einparken, keine Kollisionswahrscheinlichkeit ausgegeben, die zur Auslösung entsprechender Steuermanöver des Fahrzeugs oder von entsprechenden Sicherheitseinrichtungen führen könnte.

Bei dem erfindungsgemäßen Verfahren sollte die Relativgeschwindigkeit zwischen dem Fahrzeug und dem Gegenstand möglichst genau bekannt sein. Darüber hinaus sollte auch die Kontur des Gegenstands bzw. des entsprechenden Objekts gut ermittelt sein. Es ist daher bevorzugt, dass eine Objektverfolgung durchgeführt wird, und dass die Kollisionswahrscheinlichkeit nur für solche Objekte ermittelt wird, die seit mehreren Zyklen existieren und/oder ein vorgegebene Erkennungsgüte aufweisen. Die Erkennungsgüte kann dabei beispielsweise beschreiben, wie stabil eine Kontur eines Gegenstands oder gegebenenfalls des Fahrzeugs in den tiefenaufgelösten Bildern oder bei der Objekt-Verfolgung über mehrere Zyklen ist. Auf diese Weise können fehlerhaft, beispielsweise aufgrund einer Verdeckung durch andere Gegenstände, erkannte Objekte von der Berechnung einer Kollisionswahrscheinlichkeit ausgeschlossen werden. Vorzugsweise werden Kollisionswahrscheinlichkeiten nur für Objekte ermittelt, die über wenigstens 4 Zyklen verfolgt wurden.

Wird eine Kollision erwartet, kann es zur Dokumentation eines möglichen Unfallhergangs interessant sein, die augenblickliche Situation aufzuzeichnen. Es ist daher bevorzugt, dass bei Überschreiten einer vorgegebenen Mindestkollisionswahrscheinlichkeit wenigstens das aktuelle tiefenaufgelöste Bild und/oder Daten einer Objekt-Verfolgung auf der Basis der tiefenaufgelösten Bilder abgespeichert werden. Dazu ist es bei der erfindungsgemäßen Vorrichtung bevorzugt, dass eine mit der Einrichtung zur Ermittlung einer Kollisionswahrscheinlichkeit über eine Datenverbindung gekoppelte Speichereinrichtung vorgesehen ist, in der bei Überschreiten einer vorgegebenen Mindestkollisionswahrscheinlichkeit wenigstens das aktuelle tiefenaufgelöste Bild und/oder Daten einer Objekt-Verfolgung auf der Basis der tiefenaufgelösten Bilder speicherbar sind. Die Mindestkollisionswahrscheinlichkeit kann dabei Null sein oder auch in Abhängigkeit von Erfahrungswerten gesetzt werden. Besonders bevorzugt werden nach Überschreiten der Mindestkollisionswahrscheinlichkeit mehrere aufeinander folgende tiefenaufgelöste Bilder und/oder Daten einer Objekt-Verfolgung auf der Basis der tiefenaufgelösten Bilder über mehrere Zyklen aufgezeichnet. Entsprechende Speichereinrichtungen sind aus der deutschen Patentanmeldung der Anmelderin mit dem Titel "Verfahren zur Dokumentation einer Unfallsituation" und dem amtlichen Aktenzeichen DE 10151983 bekannt.

Die Erfindung kann insbesondere auch mit ortsfesten Sensoren, beispielsweise an Kreuzungen, eingesetzt werden. Es ist dann bevorzugt, dass die Einrichtung zur Ermittlung einer Kollisionswahrscheinlichkeit über eine Datenverbindung mit einer Einrichtung zur drahtlosen Übertragung von Daten verbunden ist. Bevorzugt werden wenigstens die Kollisionswahrscheinlichkeit und besonders bevorzugt die geschätzte Dauer bis zur Kollision drahtlos, beispielsweise per Funk, an das Fahrzeug und/oder den Gegenstand übertragen. Diese können dann über entsprechende Empfangseinrichtungen verfügen. Die Daten können dann in dem Fahrzeug und/oder dem Gegenstand zur Steuerung von Sicherheitssystemen verwendet werden.

Weiterer Gegenstand der Erfindung ist ein Computerprogramm mit Programmcode-Mitteln, um das erfindungsgemäße Verfahren durchzuführen, wenn das Programm auf einen Computer ausgeführt wird. Unter einem Computer wird dabei jede Datenverarbeitungseinrichtung verstanden, die insbesondere einen Prozessor, einen Speicher und Schnittstellen zur Zuführung bzw. zur Abgabe von Daten aufweist. Insbesondere kann der Computer einen digitalen Signalprozessor aufweisen.

Weiterhin ist Gegenstand der vorliegenden Erfindung ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird. Bei dem Datenträger kann es sich insbesondere um nichtflüchtige Speicher in Form von entsprechenden Halbleiterbauelementen, CDs, DVDs oder aus Disketten handeln.

Das erfindungsgemäße Verfahren eignet sich grundsätzlich zur Überwachung eines Bereichs vor beliebigen Fahrzeugen, insbesondere aber zur Überwachung eines Bereichs vor Fahrzeugen im Straßenverkehr.

Die Erfindung wird nun weiter beispielhaft anhand der Zeichnungen erläutert. Es zeigen:

Fig. 1   eine schematische Draufsicht auf ein Fahrzeug mit einer Vorrichtung zur Ermittlung einer Kollisionswahrscheinlichkeit nach einer ersten bevorzugten Ausführungsform der Erfindung und zwei in einem Überwachungsbereich der Vorrichtung angeordnete Gegenstände,

Fig. 2   ein schematisches Ablaufdiagramm eines Verfahrens zur Abschätzung einer Kollisionswahrscheinlichkeit nach einer ersten bevorzugten Ausführungsform der Erfindung,

Fig. 3   ein schematisches Ablaufdiagramm für die in Schritt S20 in Fig. 2 auszuführenden Teilschritte,

Fig. 4   eine schematische Darstellung des Fahrzeugs in Fig. 1 und eines Gegenstands in einer Abtastebene zur Erläuterung der vorläufigen Schätzung einer Dauer bis zu einer Kollision zwischen dem Gegenstand und dem Fahrzeug,

Fig. 5   die schematische Darstellung in Fig. 4 zur Erläuterung der Ermittlung einer Überdeckung,

Fig. 6   eine schematische Darstellung des Fahrzeugs in Fig. 1 und eines sich daran vorbeibewegenden Gegenstands zur Erläuterung eines Verfahrens zur Ermittlung einer Kollisionswahrscheinlichkeit nach einer zweiten bevorzugten Ausführungsform der Erfindung,

Fig. 7   ein schematisches Ablaufdiagramm für die in dem dem Schritt S20 in Fig. 2 entsprechenden Schritt eines Verfahrens nach einer vierten bevorzugten Ausführungsform der Erfindung auszuführenden Teilschritte, und

Fig. 8   eine schematische Darstellung einer zur Berechung einer Kollisionswahrscheinlichkeit verwendeten Funktion einer geschätzten Dauer bis zur Kollision, die bei dem Verfahren nach der vierten bevorzugten Ausführungsform der Erfindung verwendet wird.

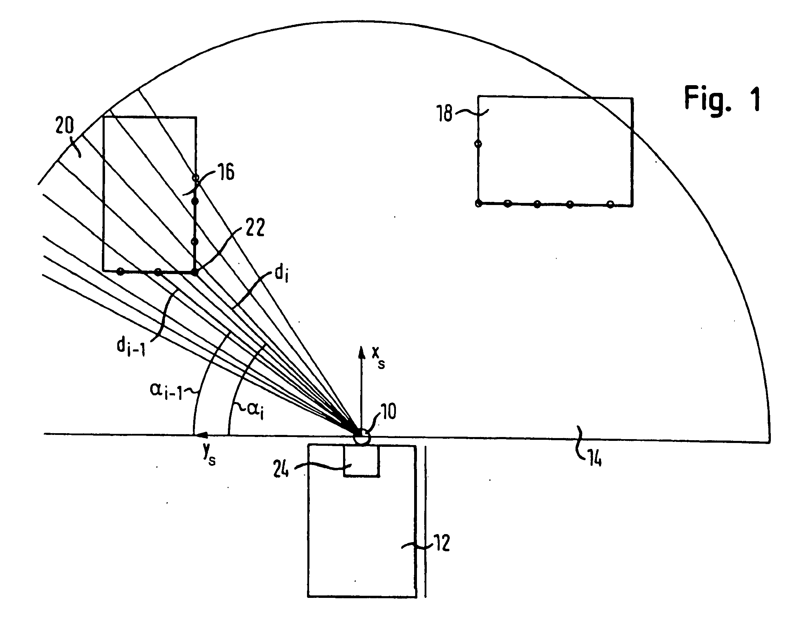

In Fig. 1 ist ein Laserscanner 10 an der Frontseite eines Fahrzeugs 12 gehalten, um Gegenstände vor dem Fahrzeug 12 zu erfassen. Der Laserscanner 10 weist einen in Fig. 1 nur teilweise gezeigten, einen Überwachungsbereich darstellenden Erfassungsbereich 14 auf, der aufgrund der anderen Lage symmetrisch zur Längsachse des Fahrzeugs 12 einen Winkel von etwa 180° abdeckt. Der Erfassungsbereich 14 ist in Fig. 1 nur schematisch und zur besseren Darstellung insbesondere in radialer Richtung zu klein dargestellt. In dem Erfassungsbereich 14 befinden sich beispielhaft zwei sich relativ zu dem Fahrzeug 12 bewegende Gegenstände 16 und 18, bei denen es sich um Fahrzeuge handelt.

Der Laserscanner 10 tastet seinen Erfassungsbereich 14 in einer Abtastebene in grundsätzlich bekannter Weise mit einem mit konstanter Winkelgeschwindigkeit geschwenkten, gepulsten Laserstrahlungsbündel 20 ab, wobei ebenfalls umlaufend in konstanten Zeitabständen $\Delta t$ zu Zeiten $\tau_i$ in festen Winkelbereichen um einen mittleren Winkel $\alpha_i$ detektiert wird, ob das Laserstrahlungsbündel von einem Punkt bzw. Bereich eines Gegenstands reflektiert wird. Der Index i läuft dabei von 1 bis zur Anzahl der Winkelbereiche im Erfassungsbereich. Von diesen Winkelbereichen sind in Fig. 1 nur einzelne gezeigt, u. a. die den mittleren Winkeln $\alpha_{i-1}$ und $\alpha_i$ zugeordneten Winkelbereiche. Hierbei sind die Winkelbereiche zur deutlicheren Darstellung wiederum übertrieben groß gezeigt. Anhand der Laufzeit des Laserstrahl-pulses wird der Sensorabstand $d_i$ des jeweils erfassten Gegenstandpunktes von dem Laserscanner 10 ermittelt. Der Laserscanner 10 erfasst daher in seinem $x_s$ - $y_s$ - Koordinatensystem als Koordinaten in einem Rohdatenelement für einen Gegenstandspunkt 22 auf der Oberfläche des Gegenstands 16 den Winkel $\alpha_i$ und den bei diesem Winkel festge-stellten Abstand $d_i$, d.h. die Position des Gegenstandspunktes 22 in Polarkoordinaten relativ zu dem Fahrzeug 12. Bei einer Abtastung des Erfassungsbereichs 14 werden von dem Laserscanner 10 somit geordnet nach aufsteigenden Polarwinkeln Rohdatenelemente mit Koordinaten ($\alpha_i$, $d_i$) bereitgestellt, wobei i eine natürliche Zahl zwischen 1 und der Anzahl der von dem Laserscanner 10 erfassten Rohdatenelemente ist. Die Menge der bei einer Abtastung erfassten Rohdatenelemente bzw. daraus, ggf. nach Korrektur der Daten und/oder Transformation in ein anderes Koordinatensystem, erhaltene Entfernungsbildpunkte bilden ein tiefenaufgelöstes Bild im Sinne der Erfindung.

Der Laserscanner 10 tastet seinen Erfassungsbereich 14 jeweils in aufeinander folgenden Abtastungen mit gleichem Zeitabstand ab, so dass eine zeitliche Folge von Abtastungen und damit tiefenaufgelösten Bildern entsteht.

Zur Verarbeitung der Rohdatenelemente bzw. Entfernungsbildpunkte weist der Laserscanner 10 eine Auswerteelektronik bzw. Datenverarbeitungseinrichtung 24 auf, die im Beispiel in dem Laserscanner 10 angeordnet ist, grundsätzlich aber auch davon abgesetzt angeordnet sein kann. Die Datenverarbeitungseinrichtung 24 weist u. a. einen zur Ausführung eines Verfahrens nach einer ersten bevorzugten Ausführungsform der Erfindung programmierten digitalen Signalprozessor, eine mit dem digitalen Signalprozessor verbundene Speichereinrichtung sowie Schnittstellen zur Ausgabe von Daten an eine in den Figuren nicht gezeigte Fahrzeugsteuerung auf.

Der Laserscanner 10 mit der Datenverarbeitungsvorrichtung 12 bildet daher eine Vorrichtung zur Ermittlung einer Wahrscheinlichkeit für eine Kollision zwischen dem Fahrzeug 12 und einem Gegenstand nach einer ersten bevorzugten Ausführungsform der Erfindung.

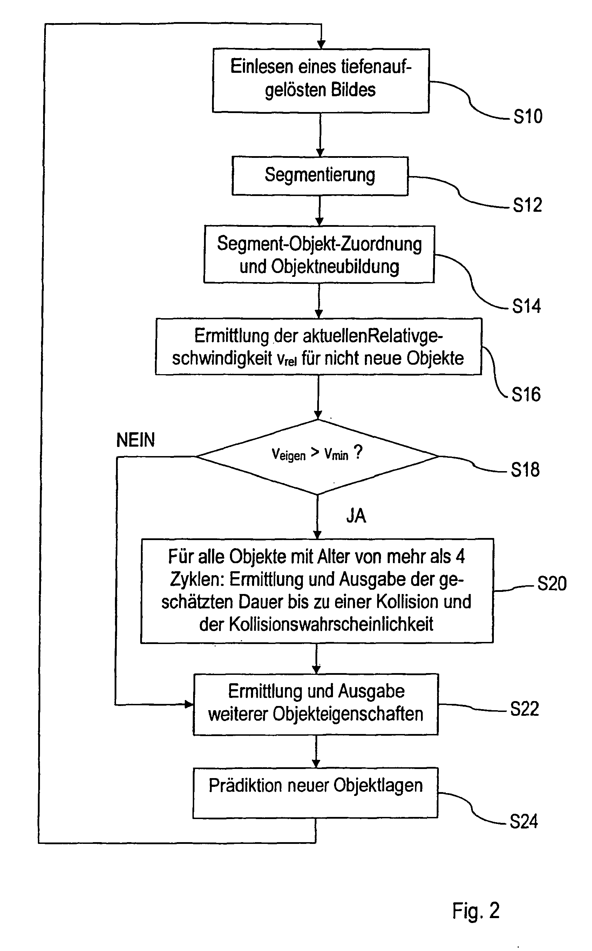

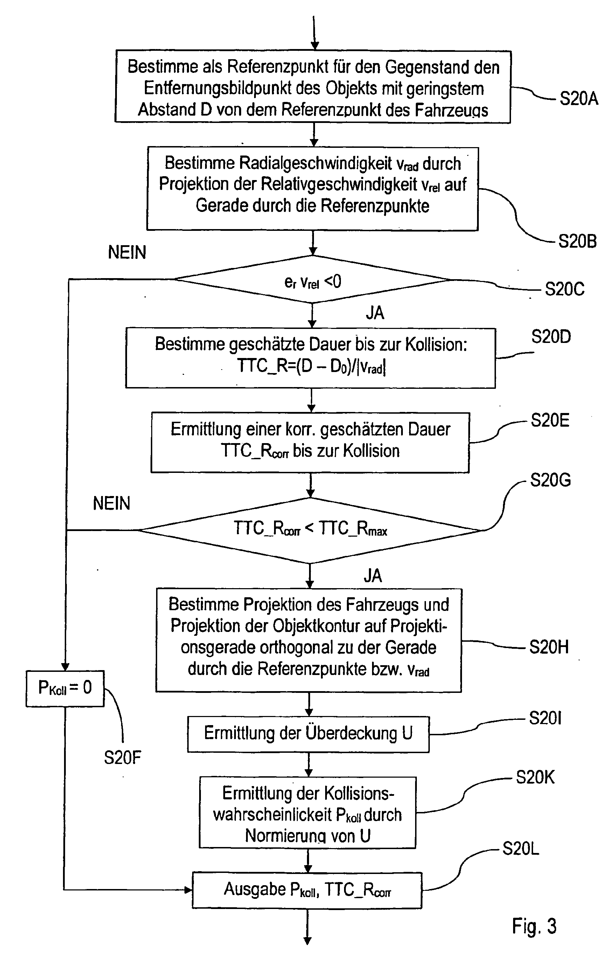

Das Verfahren zur Abschätzung einer Wahrscheinlichkeit für eine Kollision zwischen dem Fahrzeug 12 und einem Gegenstand, beispielsweise dem Gegenstand 18, nach einer ersten bevorzugten Ausführungsform der Erfindung ist schematisch in den Fig. 2 und 3 dargestellt.

Das Verfahren wird zyklisch durchgeführt, wobei ein Zyklus für jedes neu erfasste tiefenaufgelöste Bild durchgeführt wird.

Der Laserscanner 10 erfasst, wie bereits erwähnt, in konstanten Zeitabständen $\Delta T$ tiefenaufgelöste Bilder seines Überwachungsbereichs 14.

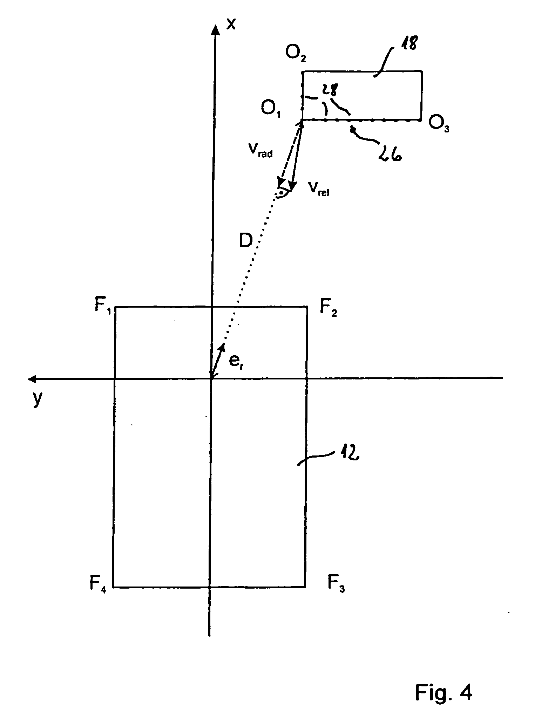

Die tiefenaufgelösten Bilder können ggf. Korrekturen, z.B. in Bezug auf eine Eigenbewegung des Laserscanners 10, unterworfen sein. Weiterhin erfolgt eine Transformation aus dem $x_S$-$y_S$- Laserscannerkoordinatensystem in Fig. 1 in das in den Fig. 4, 5 und 6 gezeigte, mit dem Fahrzeug 12 fest verbundene x-y-Fahrzeugkoordinatensystem. Bei der Koordinatentransformation wird insbesondere die Reihenfolge der sich aus den Rohdatenelementen ergebenden Entfernungsbildpunkte beibehalten, so dass diese auch in dem Fahrzeugkoordinatensystem in einer Reihenfolge aufsteigender Polarwinkel geordnet sind.

Die tiefenaufgelösten Bilder werden zur Durchführung eines Objekterkennungs- und -verfolgungsverfahrens verwendet, das im vorliegenden Ausführungsbeispiel unter Verwendung einer Segmentierung abläuft. Das Verfahren ist genauer in Ewald, A. und Wilhoeft, V.: "Object Detection with Laser Scanners for Automotive Applications" in Proceedings zu der Tagung IFAC 2000 in Braunschweig, Deutschland genauer beschrieben. Das Objekterkennungs- und -verfolgungsverfahren umfasst dabei die Schritte S10 bis S14, S22 und S24 und kann in anderen Ausführungsbeispielen durch andere Objekterkennungs- und Verfolgungsverfahren ersetzt sein, die ebenfalls die benötigten Daten bereitstellen.

In Schritt S 10 wird ein aktuelles tiefenaufgelöstes Bild von dem Laserscanner 10 eingelesen, das Entfernungsbildpunkte mit Lagekoordinaten umfasst.

Das aktuelle tiefenaufgelöste Bild wird in Schritt S12 zunächst segmentiert, d.h. in Gruppen von Entfernungsbildpunkten zerlegt, die gemäß einem vorgegebenen Segmentierungskriterium, beispielsweise einem maximalen Abstand voneinander als jeweils einem Segment zugehörig erkannt werden.

In dem Schritt S14 werden die Segmente soweit möglich bereits in dem Verfahren in vorhergehenden Zyklen aufgetretenen Objekten zugeordnet, wobei wiederum ein Abstandskriterium, beispielsweise Abstände von einem geometrischen Schwerpunkt des jeweiligen Objekts, verwendet wird. Die Zuordnung erfolgt dabei anhand von prädizierten Lagen der Objekte, die aus erfassten Lagen in einem vorhergehenden Zyklus des Verfahrens erhalten wurden. Dabei werden neue Lagen der bereits vorhandenen Objekte ermittelt und aus nicht zugeordneten Segmenten neue Objekte gebildet. In diesem Schritt werden für jedes Objekt Kennungen derjenigen Entfernungsbildpunkte gespeichert, die diesem über die entsprechenden Segmente zugeordnet sind.

Auf der Basis der Lagen der Objekte in dem aktuellen Zyklus und in dem vorhergehenden Zyklus wird dann in Schritt S16 für jedes Objekt, das schon in einem vorhergehenden Zyklus existiert hat, eine aktuelle Relativgeschwindigkeit unter Verwendung der Zyklusdauer $\Delta T$ bestimmt und abgespeichert.

In dem folgenden Schritt S18 wird festgestellt, ob eine Eigengeschwindigkeit $v_{eigen}$, die über einen entsprechenden Sensor an dem Fahrzeug, der mit der Datenverabeitungseinrichtung 24 verbunden ist, ermittelt wurde, größer ist als eine vorgegebene Mindestgeschwindigkeit $v_{min}$, die im vorliegenden Beispiel 15 km/ Std. beträgt. Ist dies nicht der Fall, wird das Verfahren mit Schritt S22 fortgesetzt, in dem weitere Objekteigenschaften ermittelt und ausgegeben werden. Dabei kann es sich beispielsweise um die Lage des Schwerpunkts, eine Güte der Erkennung oder ähnliches handeln.

Übersteigt die Eigengeschwindigkeit die Mindestgeschwindigkeit in Schritt S18 wird in Schritt S20 für alle Objekte, die schon seit mindestens vier Zyklen vorhanden sind, eine geschätzte Dauer bis zu einer Kollision und eine entsprechende Kollisionswahrscheinlichkeit ermittelt und ausgegeben. Nach diesem Schritt wird das Verfahren mit Schritt S22 fortgesetzt, der wie zuvor beschrieben ausgeführt wird.

In Schritt S24 erfolgt dann eine Prädiktion neuer Objektlagen für den nächsten Zyklus, wozu beispielsweise ein Kalman-Filter verwendet werden kann.

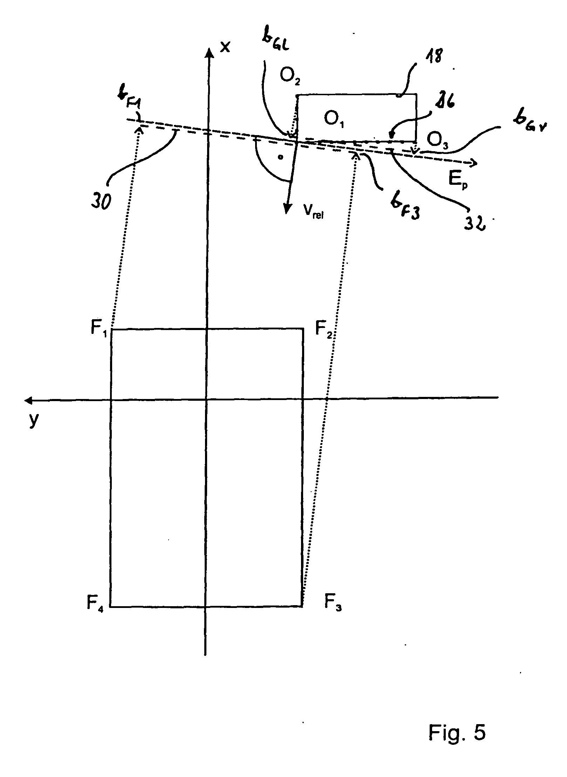

Die in Schritt S20 für jedes untersuchte Objekt durchgeführten Teilschritte sind genauer in Fig. 3 gezeigt. Eine Veranschaulichung der dabei verwendeten geometrischen Beziehungen ist in den Fig. 4 und 5 gezeigt.

Eine Kontur 26 für den Gegenstand 18 wird aus dem aktuellen tiefenaufgelösten Bild ermittelt und ist im Beispiel durch Konturpunkte gegeben, die durch die dem Gegenstand 18 entsprechenden Objekt zugeordneten Entfernungsbildpunkte gebildet sind. Diese sind daher in einer Reihenfolge aufsteigender Polarwinkel geordnet. Die Kontur 26 ist in den Fig. 4 und 5 durch gepunktete Linien dargestellt, wobei die Punkte nur grob schematisch die Kontur- bzw. Entfernungsbildpunkte 28 darstellen. Zur Vereinfachung wird im Folgenden unter der Kontur eines Objekts die Kontur für einen Gegenstand, dem das Objekt zugeordnet ist, verstanden.

Zunächst wird in den Schritten 20A bis 20E eine Dauer bis zu einer Kollision geschätzt, wobei gleichzeitig geprüft wird, ob eine Kollision aufgrund der Relativgeschwindigkeit $v_{rel}$ überhaupt möglich ist. Dabei wird davon ausgegangen, dass sich für den betrachteten Zeitraum zwischen der Erfassung des tiefenaufgelösten Bildes und einer möglichen Kollision das Fahrzeug 12 und ein Gegenstand mit konstanter Relativgeschwindigkeit $v_{rel}$ zueinander bewegen.

In Schritt S20A wird zunächst als Referenzpunkt für den Gegenstand 18, derjenige Konturpunkt des Objekts bestimmt, der von einem Referenzpunkt des Fahrzeugs, der im Beispiel durch den Ursprung des Fahrzeugkoordinatensystems gegeben ist, den geringsten Abstand D aufweist. Dazu werden für alle den dem Gegenstand 18 zugeordneten Objekt zugeordneten Entfernungsbild- bzw. Konturpunkte die Abstände von dem Koordinatenursprung berechnet. Als Referenzpunkt wird dann der nächste Entfernungsbildpunkt bzw. Konturpunkt verwendet. In Fig. 4 ist dies der Konturpunkt $O_1$.

In Teilschritt S20B wird dann aus der Relativgeschwindigkeit $v_{rel}$ durch Projektion auf die Gerade durch die Referenzpunkte für den Gegenstand und das Fahrzeug, d.h. im Beispiel die Gerade durch den Ursprung des Fahrzeugkoordinatensystems und den nächstliegenden Konturpunkt $O_1$, eine Radialgeschwindigkeit $v_{rad}$ bestimmt. Mit der Relativgeschwindigkeit $v_{rel}$ wird auch die Radialgeschwindigkeit $v_{rad}$ als konstant angenommen.

Zur Berechung der Radialgeschwindigkeit wird eine radialer Einheitsvektor $e_r$ verwendet, der durch den zu dem Konturpunkt $O_1$ führenden Ortsvektor dividiert durch den Betrag des Ortsvektors des Konturpunktes $O_1$, d.h. den Abstand D, gegeben ist. Die vektorielle Radialgeschwindigkeit ergibt sich als Produkt aus dem Einheitsvektor und dem Skalarprodukt aus dem Einheitsvektor $e_r$ und dem Vektor der Relativgeschwindigkeit $v_{rel}$.

Nur in dem Fall, dass das Skalarprodukt $e_r \cdot v_{rel}$ negativ ist und die Radialgeschwindigkeit auf das Fahrzeug 12 zu gerichtet ist, bewegen sich das Fahrzeug 12 und der Gegenstand 18 bzw. das Fahrzeug 18 aufeinander zu.

In Teilschritt S20C wird daher überprüft, ob das Skalarprodukt negativ ist. Ist dies nicht der Fall, wird der Wert für geschätzte Dauer bis zur Kollision auf einen vorgegebenen in der Praxis nie auftauchenden Wert gesetzt und in Schritt S20F die Kollisionswahrscheinlichkeit $P_{koll}$ auf den Wert Null gesetzt. Anschließend werden diese Daten in Schritt S20L ausgegeben. Alternativ kann auch gleich ein Sprung zu Schritt S22 erfolgen.

Ist das Skalarprodukt negativ, wird in Teilschritt S20D eine Dauer TTC_R bis zu einer Kollision bestimmt, in dem der um einen Sicherheitsabstand $D_0$ von 0,8 m reduzierte Abstand D des nächsten Konturbildpunkts $O_1$ des Gegenstands 18 durch den Betrag der Radialgeschwindigkeit $v_{rad}$ geteilt wird. Der Sicherheitsabstand $D_0$ ergibt sich dabei aus dem mittleren Abstand der Kontur des Fahrzeugs 12 von dem Koordinatenursprung des Fahrzeugkoordinatensystems für die Quadranten mit positiven x-Werten.

In Teilschritt S20E wird dann eine korrigierte geschätzte Dauer TTC_R$_{corr}$ bis zur Kollision bestimmt, die sich aus der geschätzten Dauer TTC_R durch Subtraktion einer Latenzzeit ergibt. Diese Latenzzeit ist durch die Differenz der aktuellen Systemzeit und die Zeit gegeben, zu der der Gegenstand 18 durch den Laserscanner 10 erfasst wurde. Alternativ ist es bei einer anderen Ausführungsform möglich, dass die Objekte über einen CAN-Bus ausgegeben werden. Dann enthält jeder entsprechende Datensatz einen Zeitstempel der Abtastung, aus der die Objekte ermittelt wurden, sowie den Zeitversatz der Entfernungsbildpunkte innerhalb der Abtastung für jedes Objekt. Mit diesen Informationen ist dann die Verschiebung der Dauer bis zur Kollision auf den augenblicklichen Zeitpunkt auch in nachfolgenden Anwendungen möglich.

In Schritt S20G wird nun überprüft, ob die korrigierte Dauer TTC_R$_{corr}$ bis zur Kollision kleiner ist als eine vorgegebene maximale Dauer bis zu einer Kollision TTC_R$_{max}$, die in Abhängigkeit von der zu erwartenden Dynamik der Umgebung des Fahrzeugs 12, insbesondere dessen möglichen Eigengeschwindigkeiten und den möglichen Geschwindigkeiten anderer Fahrzeuge, im vorliegenden Beispiel zu etwa 100 ms, gewählt ist.

Überschreitet die korrigierte Dauer TTC_R$_{corr}$ die maximale Dauer TTC_R$_{max}$, wird in Schritt S20F die Kollisionswahrscheinlichkeit auf den Wert Null gesetzt. Das Verfahren wird dann mit Schritt S20L fortgesetzt, in dem die Kollisionswahrscheinlichkeit zusammen mit der korrigierten geschätzten Dauer TTC_R$_{corr}$ ausgegeben wird. Bei einem anderen Ausführungsbeispiel kann alternativ auch hier ein Rücksprung zu Schritt S 22 ohne Ausgabe von TTC_R$_{max}$ und P$_{koll}$ erfolgen.

Andernfalls wird in Schritt S20H eine auf eine zu der Relativgeschwindigkeit v$_{rel}$ orthogonale Projektionsgerade e projizierte Kontur des Fahrzeugs 12 und des Gegenstands 18, wie in Fig. 5 gezeigt, ermittelt. Dabei wird angenommen, dass die Relativbewegung des Fahrzeugs 12 und des Gegenstands 18 mit der aktuellen Relativgeschwindigkeit erfolgt, so dass es genügt, die Kollisionslage nur in Richtung der Projektionsgeraden zu ermitteln. Die Schätzung der Kollisionslage in der zu der Relativgeschwindigkeit parallelen Richtung spielt keine Rolle, so dass zur Ermittlung der Überdeckung die Kollisionslage in dieser Richtung nicht geschätzt zu werden braucht bzw. beliebig angenommen werden kann.

Zur Ermittlung der projizierten Kontur des Fahrzeugs 12, dessen Kontur durch die Punkte F$_1$ bis F$_4$, deren Lage in Abhängigkeit von der Form des Fahrzeugs 12 in dem Fahrzeugkoordinatensystem vorgegeben ist, werden für dessen vier äußerste Eckpunkte F$_1$ bis F$_4$ die entsprechenden Ortsvektoren auf die zu der Relativgeschwindigkeit v$_{rel}$ orthogonale Grade E$_p$ projiziert. Dazu wird ein Einheitsvektor e$_p$ bestimmt, der auf der Relativgeschwindigkeit v$_{rel}$ senkrecht steht, und sich im Beispiel aus den Kartesischen Koordinaten v$_{relx}$ und v$_{rely}$ der Relativgeschwindigkeit v$_{rel}$ in dem Fahrzeugkoordinatensystem mit folgenden Koordinaten e$_{px}$ und e$_{py}$ ergibt:

$$e_{px} = -v_{rely} \; / \; |v_{rel}|$$

$$e_{py} = v_{relx} \; / \; |v_{rel}|,$$

wobei $|v_{rel}|$ den Betrag des Vektors der Relativgeschwindigkeit v$_{rel}$ bezeichnet. Die Projektionen der Punkte F$_1$ bis F$_4$ auf die Gerade E$_p$ ergeben sich einfach als Skalarprodukte der entsprechenden, zu den Punkten F$_1$ bis F$_4$ führenden Ortsvektoren mit diesem Einheitsvektor e$_p$. Für jeden der Konturpunkte F$_1$ bis F$_4$ ergeben sich damit auf der Projektionsgeraden E$_p$ durch die jeweiligen Skalarprodukte gegebene Abstände b$_{F1}$ bis b$_{F4}$ von dem auf die Projektionsgerade E$_p$ projizierten Koordinatenursprung. Diese Abstände sind in Fig. 5 für die Punkte F$_1$ und F$_3$ durch die Punkte b$_{F1}$ und b$_{F3}$ dargestellt.

Die projizierte, geschätzte Kontur 30 für das Fahrzeug 12 ergibt sich nun dadurch, dass unter den Abständen b$_{F1}$ bis b$_{F4}$ die Abstände b$_{F1}$ und b$_{Fr}$ gesucht werden, die am kleinsten bzw. größten sind. Das bedeutet, dass die beiden Konturpunkte unter den Konturpunkten F$_1$ bis F$_4$ gesucht werden, deren Projektion b$_{F1}$ bis b$_{F4}$ am kleinsten und am größten ist. Dieses sind die entsprechenden äußersten linken bzw. rechten Punkte der auf die Projektsgrade E$_p$ projizierten Kontur 30 des Fahrzeugs 12, im Beispiel in Fig. 5 b$_{F1}$ und b$_{F3}$.

Zur Ermittlung der projizierten Kontur 32 des Gegenstands 18 werden unter den Kontur- bzw. Entfernungsbildpunkten des Gegenstands 18 nun die beiden Kontur- bzw. Entfernungsbildpunkte gesucht, die unter den dem entsprechenden Objekt zugeordneten Kontur- bzw. Entfernungsbildpunkten den kleinsten bzw. größten Polarwinkel aufweisen. Da die Entfernungsbildpunkte in einer entsprechenden Reihenfolge gespeichert sind, können diese Punkte sehr schnell ermittelt werden. Im Beispiel sind dies die Punkte O$_2$ und O$_3$ der Kontur des dem Gegenstand 18 zugeordneten Objekts. Zur Ermittlung der geschätzten, auf die Projektionsgrade E$_p$ projizierten Kontur werden nun die Skalarprodukte der zu den äußersten linken und rechten Entfernungsbildpunkten, im Beispiel $O_2$ und $O_3$, führenden Ortsvektoren mit dem Einheitsvektor $e_p$ skalar multipliziert, woraus sich Abstände $b_{Gl}$ und $b_{Gr}$ von dem auf die Projektionsgerade $E_p$ projizierten Ursprung des Fahrzeugkoordinatensystems ergeben. Die Abstände $b_{G1}$ und $b_{Gr}$ sind in Fig. 5 wiederum durch entsprechende Punkte $b_{G1}$ und $b_{G1}$ gekennzeichnet.

In Schritt S20I wird dann die Überdeckung U der projizierten Konturen 30 und 32 des Fahrzeugs 12 und des Gegenstands 18 folgendermaßen aus den Abständen $b_{F1}$, $b_{Fr}$, $b_{G1}$ und $b_{Gr}$ bestimmt. Für das Fahrzeug 12 und den Gegenstand 18 werden die beiden entsprechenden Werte $b_{F1}$ und $b_{Fr}$ bzw. $b_{G1}$ und $b_{Gr}$ jeweils nach ihrer Größe geordnet, wodurch sich Werte $b_{Fmin}$ und $b_{Fmax}$ bzw. $b_{Gmin}$ und $b_{Gmax}$ ergeben. Die Überdeckung U wird nun auf Null gesetzt falls $b_{Fmin}, > b_{Gmax}$ oder $b_{Gmin}, > b_{fmax}$ ist. Andernfalls ergibt sich die Überdeckung U zu

$$U = \min\,(b_{Fmax},\ b_{Gmax}) - \max\,(b_{Fmin},\ b_{Gmin}).$$

wobei min(n, m) und max(n, m) jeweils das Minimum bzw. Maximum von Werten n und m bezeichnen.

In Schritt S20K wird dann die Kollisionswahrscheinlichkeit $P_{koll}$ durch Normierung der Überdeckung U mit der Länge der kürzesten der projizierten Konturen 30 und 32 erhalten. Die Länge der projizierten Konturen ergibt sich jeweils zu $b_F = b_{Fmax} - b_{Fmin}$ bzw. $b_G = b_{Gmax} - b_{Gmin}$. Es gilt daher

$$P_{koll} = U\ /\ \min\,(b_F,\ b_G).$$

Die so ermittelte Kollisionswahrscheinlichkeit ist also 1, wenn sich die Konturen vollständig überdecken und 0, wenn die Konturen sich überhaupt nicht überdecken. In dem Zwischenbereich ist sie eine monotone Funktion der Überdeckung U.

In Schritt S20L wird dann die Kollisionswahrscheinlichkeit zusammen mit der korrigierten geschätzten Dauer $TTC\_R_{corr}$ bis zur Kollision für das jeweilige Objekt ausgegeben.

Die Datenverarbeitungseinrichtung 24 umfasst daher im Sinne der Erfindung eine Einrichtung zur Ermittlung einer Kollisionswahrscheinlichkeit mit einem Mittel zur Schätzung der Dauer bis zu einer Kollision zwischen dem Fahrzeug und dem Gegenstand, einem Mittel zur Ermittlung einer auf eine Projektionsgerade projizierten Kontur für den Gegenstand und für das Fahrzeug in einer geschätzten Kollisionslage und deren Lage zueinander, ein Mittel zur Ermittlung einer Überdeckung der geschätzten, projizierten Konturen, und einem Mittel zur Bestimmung der Kollisionswahrscheinlichkeit in Abhängigkeit von der Überdeckung der beiden projizierten Konturen, wobei die Projektionsgerade im Wesentlichen orthogonal zu einer geschätzten Relativgeschwindigkeit bei Erreichen der geschätzten Kollisionslage, die der Gegenstand und das Fahrzeug relativ zueinander nach Ablauf der geschätzten Dauer einnehmen, orientiert ist.

Bei einem Verfahren nach einer zweiten bevorzugten Ausführungsform der Erfindung, das mit einer Vorrichtung nach einer zweiten bevorzugten Ausführungsform der Erfindung durchführbar ist, die sich von der Vorrichtung nach der ersten bevorzugten Ausführungsform der Erfindung nur durch die entsprechende Programmierung des Prozessors unterscheidet, werden die Ermittlung der projizierten Kontur des dem Gegenstand zugeordneten Objekts und die Ermittlung der Kollisionswahrscheinlichkeit $P_{koll}$ gegenüber dem Verfahren nach dem ersten Ausführungsbeispiel modifiziert. Die Modifikationen sind dabei voneinander unabhängig.

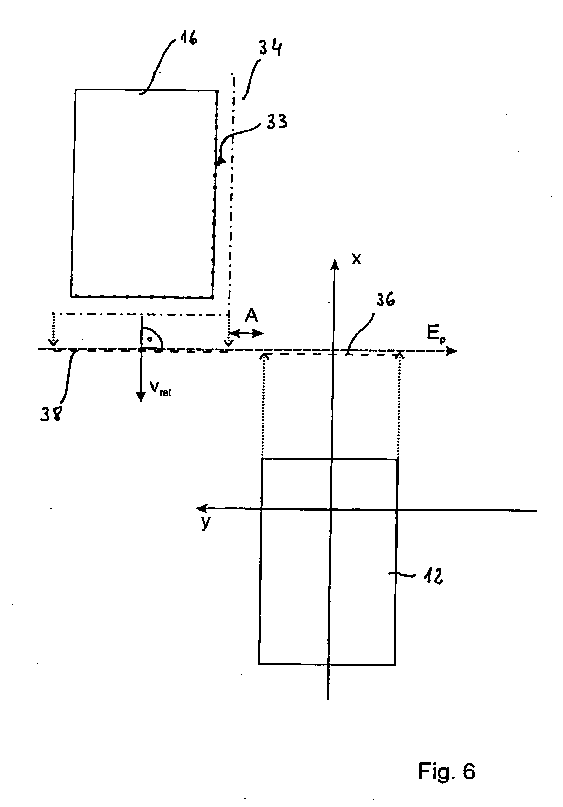

Wie in Fig. 6 nun für den Gegenstand 16 veranschaulicht, wird vor der Ermittlung der Projektionen $b_{G1}$ und $b_{Gr}$ die Kontur 33 des Gegenstands 16 bzw. des zugehörigen Objekts mit einem Skalierungsfaktor, der in Abhängigkeit von der erwarteten Dynamik des Gegenstands bzw. Fahrzeugs 16, der Dynamik des eigenen Fahrzeugs 12 und der Messgenauigkeit des Laserscanners 10 ermittelt wird und im Beispiel etwa 1,3 beträgt, gewissermaßen vergrößert, indem die Abstände der Konturpunkte von dem geometrischen Schwerpunkt mit dem Skalierungsfaktor multipliziert werden. Die vergrößerte Kontur 34 ist in Fig. 6 durch eine strichpunktierte Linie dargestellt Die Überdeckung U kann dann wie zuvor in Schritt S20I ermittelt werden. Hierdurch werden Unsicherheiten in dem Bewegungsverhalten des Gegenstands bzw. Fahrzeugs 16 bzw. Unsicherheiten in dessen Kontur, wenn diese sich beispielsweise in einer zu der Abtastebene senkrechten Richtung verändert, berücksichtigt.

Bei der Ermittlung der Kollisionswahrscheinlichkeit $P_{koll}$ in Schritt S20K wird dann, wenn keine Überdeckung festgestellt wird, ein Abstand A zwischen den projizierten Konturen 36 und 38 des Fahrzeugs 12 bzw. des Gegenstands 16 ermittelt, indem die Differenzen $b_{Fmin} - b_{Gmax}$ bzw. $b_{Gmin} - b_{Fmax}$ berechnet werden. Die Differenz mit positivem Vorzeichen ergibt dann einen Abstand A zwischen dem Fahrzeug 12 und dem Gegenstand 16 in einer geschätzten bzw. erwarteten Kollisionslage (vgl. Fig. 6).

Die Kollisionswahrscheinlichkeit $P_{koll}$ wird nun so bestimmt, dass sie bei vorhandenen Überdeckungen U einen endlichen Wert annimmt und bei Erreichen des Wertes 0 in einen vorgegebenen Grenzwert übergeht, von dem aus die Kollisionswahrscheinlichkeit weiter als Funktion des Abstands A abfällt. Auf diese Weise kann auch bei einer knappen Vorbeifahrt des Fahrzeugs 12 an einem Gegenstand 16 eine Kollisionswahrscheinlichkeit angegeben werden, obwohl keine Überdeckung vorliegt.

Zum Beispiel kann die Kollisionswahrscheinlichkeit durch folgende Formel gegeben sein, wobei w einen Gewichtungsparameter mit einem Wert zwischen 0 und 1, beispielsweise 0,75, und $A_M$ einen vorgegebenen Sicherheitsabstand, beispielsweise von 1 m, bezeichnen:

$$P_{koll} = \begin{cases} (1-w) + w \cdot U / (\min(b_F, b_G)) & f\ddot{u}r \quad U > 0 \\ w \cdot (A_M - A) & f\ddot{u}r \quad U \leq 0, \ A < A_M \\ 0 & f\ddot{u}r \quad U \leq 0, \ A \geq A_M \end{cases}$$

Die anderen Größen werden wie in dem vorhergehenden Ausführungsbeispiel berechnet.

Bei einem Verfahren nach einer dritten bevorzugten Ausführungsform der Erfindung wird statt des in den Schritten S10 bis S14, S22 und S24 verwendeten Objektverfolgungsverfahrens das in der oben bereits genannten deutschen Patentanmeldung der Anmelderin mit dem amtlichen Aktenzeichen 102 58 794.9, deren Inhalt hiermit durch Bezugnahme in die Beschreibung aufgenommen wird, beschriebene Verfahren, insbesondere nach dem Ausführungsbeispiel darin, verwendet. Bei diesem Verfahren erfolgt die Objektverfolgung auf der Basis der erfassten Konturen. Die Konturpunkte für den Gegenstand sind dann durch die aus den Entfernungsbildpunkten ermittelten Konturpunkte bzw. -elemente gegeben.

Bei einem Verfahren nach einer vierten bevorzugten Ausführungsform der Erfindung ist gegenüber dem ersten Ausführungsbeispiel die Schätzung der Dauer bis zur Kollision und die Ermittlung der Kollisionswahrscheinlichkeit modifiziert.

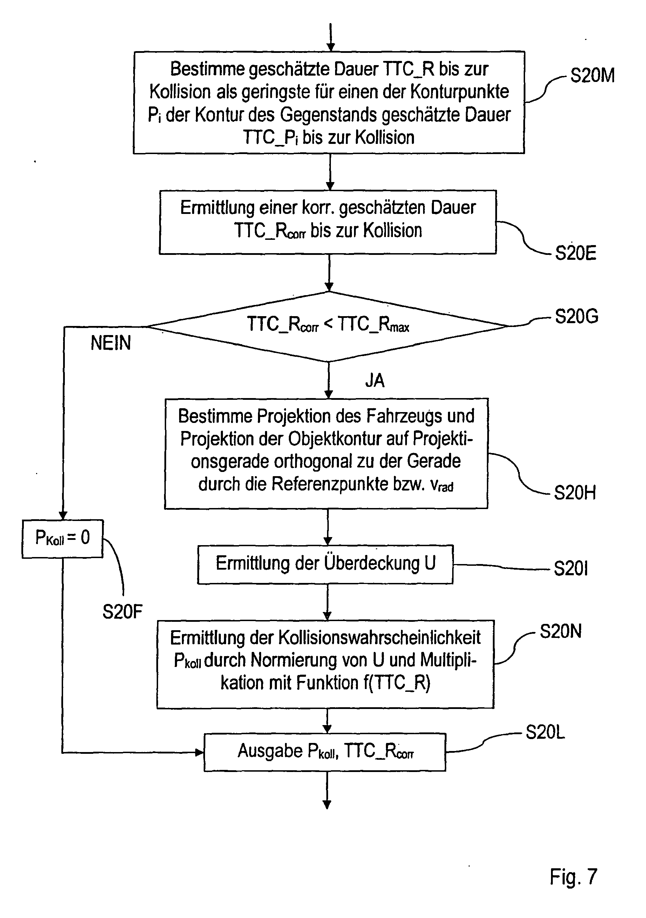

Zum einen werden bei diesem Ausführungsbeispiel mehrere Konturpunkte zur Schätzung der Dauer bis zu einer Kollision verwendet. Wie in Fig. 7 veranschaulicht, sind die Schritte S20A bis S20D des Verfahrens des ersten Ausführungsbeispiels durch den Schritt S20M ersetzt. In diesem Schritt werden für alle im Folgenden durch den Laufindex i gekennzeichneten Konturpunkte der erfassten Kontur des Gegenstands, im Beispiel in Fig. 4 die durch die dem Gegenstand 18 zugeordneten Entfernungsbildpunkte gegebenen Konturpunkte 28, konturpunktspezifische Dauern TTC_Pi bis zur Kollision bestimmt.

Dazu wird unter Verwendung des gleichen Referenzpunkts für das Fahrzeug 12, wie im ersten Ausführungsbeispiel, für jeden der Konturpunkte 28 der entsprechende Abstand $D_i$ von dem Referenzpunkt bestimmt. Weiterhin wird für jeden der Konturpunkte analog zu Schritt S20B die Radialgeschwindigkeit $v_{radi}$ bestimmt. Dazu wird als Referenzpunkt für den Gegenstand in dem zu dem Schritt S20B analogen Schritt der jeweilige Konturpunkt i verwendet.

Sodann wird in einem Schritt S20C entsprechenden Schritt geprüft, ob sich der Konturpunkt und das Fahrzeug aufeinander zu bewegen. Ist dies nicht der Fall, wird TTC_Pi nicht bestimmt oder auf einen vorgegebenen großen Wert gesetzt, der in der Praxis nicht auftreten kann. Analog zu Schritt S20D wird dann für jeden der Konturpunkt die konturpunktspezifische Dauer bis zur Kollision gemäß der Formel

$$TTC\_Ri = (D_i - D_0) / |v_{radi}|$$

ermittelt. Die geschätzte Dauer TTC_R bis zur Kollision zwischen dem Gegenstand und dem Fahrzeug wird dann auf den kleinsten Wert der ermittelten konturpunktspezifischen Dauern bis zur Kollision TTC_Pi gesetzt. Die so ermittelte Dauer bis zu einer Kollision ergibt insbesondere bei Gegenständen bessere Schätzungen, die einen in einem spitzen Winkel zu dem Relativgeschwindigkeit verlaufenden Abschnitt der Kontur aufweisen, der insbesondere auch bereits neben dem Fahrzeug liegen kann.

Weiterhin wird bei dem Verfahren nach dem vierten Ausführungsbeispiel die Kollisionswahrscheinlichkeit explizit zeitabhängig ermittelt, wozu Schritt S20K durch Schritt S20N ersetzt ist (vgl. Fig. 7). Bezeichnet $U_{rel}$ die auf die kürzeste projizierte Kontur normierte Überdeckung, die im ersten Ausführungsbeispiel die Kollisionswahrscheinlichkeit ergibt,

$$U_{rel} = U / \min(b_F, b_G),$$

wobei U wie im ersten Ausführungsbeispiel ermittelt ist, ist die Kollisionswahrscheinlichkeit nun durch ein Produkt aus der normierten Überdeckung $U_{rel}$ und einem von der geschätzten Dauer TTC_R bis zur Kollision abhängigen Faktor als

$$P_{koll} = U_{rel} f(TTC\_R)$$

gegeben, wobei f(TTC_R) eine monoton fallende Funktion der geschätzten Dauer bis zur Kollision TTC_R ist, die jedoch nicht unbedingt streng monoton zu sein braucht. Beispielhaft ist für dieses Ausführungsbeispiel

$$f(TTC\_R) = \begin{cases} 1 & \text{für} \quad TTC\_R < TTC_1 \\ 1 - (TTC\_R - TTC_1)/(TTC_2 - TTC_1) & \text{für} \quad TTC_1 < TTC\_R < TTC_2 \\ 0 & \text{für} \quad TTC_2 < TTC\_R \end{cases}$$

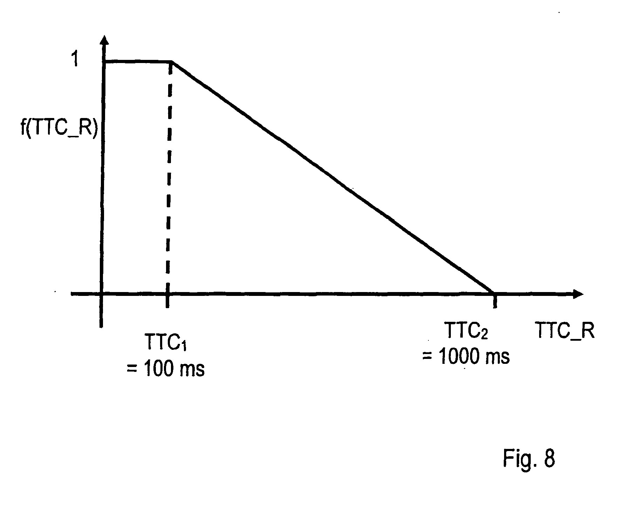

wobei $TTC_1$ und $TTC_2$ vorgegebene konstante Zeitwerte sind, die in Abhängigkeit von der zu erwartenden Dynamik des Gegenstands und/oder des Fahrzeugs mit $TTC_1 < TTC_2$ gewählt sind (vgl. Fig. 8). $TTC_1$ kann insbesondere als die Zeitdauer angesehen werden, innerhalb derer eine wesentliche Änderung der Bewegungszustände von Fahrzeug und Gegenstand relativ zueinander nicht zu erwarten ist, so dass die Überdeckung U bzw. die normierte Überdeckung $U_{rel}$ allein die Kollisionswahrscheinlichkeit bestimmt. $TTC_2$ kann als Zeitdauer aufgefasst werden, innerhalb derer mit einer gewissen Wahrscheinlichkeit angenommen werden kann, dass der Bewegungszustand von Fahrzeug und Gegenstand zueinander und damit auch die Überdeckung mit allerdings mit zunehmender geschätzter Dauer TTC_R bis zur Kollision abnehmender Wahrscheinlichkeit im Wesentlichen unverändert bleibt. Für über $TTC_2$ hinausgehende Zeiten wird nicht mehr erwartet, dass die ermittelte Überdeckung noch Relevanz besitzt. Im Beispiel ist $TTC_1$ etwa zu 100 ms und $TTC_2$ zu etwa 1000 ms gewählt.

Die Funktion f(TTC_R) kann daher so interpretiert werden, dass sie eine Schätzung für die Wahrscheinlichkeit wiedergibt, dass der angenommene Bewegungszustand von Fahrzeug und Gegenstand relativ zueinander bis zur Kollision im Wesentlichen unverändert bleibt.

In einer anderen Ausführungsform können $TTC_1$ und $TTC_2$ auch objektspezifisch gewählt werden. Wird insbesondere im Rahmen der Objektverfolgung eine Objektklassifikation durchgeführt, bei der Gegenständen entsprechende Objekte Objektklassen, beispielsweise für Fahrzeuge, Personen oder Bäume, zugeordnet werden, so können $TTC_1$ und $TTC_2$ in Abhängigkeit von der Objektklasse des jeweiligen Objekts bzw. Gegenstands gewählt sein.

Die Kollisionswahrscheinlichkeit wird dann wie im ersten Ausführungsbeispiel in Schritt S20L mit der korrigierten geschätzten Dauer TTC_R$_{corr}$ bis zur Kollision ausgegeben.

In anderen Ausführungsbeispielen können die Modifikationen des ersten Ausführungsbeispiels und der anderen beschriebenen Ausführungsbeispiele kombiniert werden. Insbesondere können bei Kombination mit dem dritten Ausführungsbeispiel als Konturpunkte statt der Entfernungsbildpunkte die Konturelemente verwendet werden, die zur Objektverfolgung auf Basis der Konturen verwendet werden.

**Bezugszeichenliste**

10 Laserscanner
12 Fahrzeug
14 Erfassungsbereich
16 Gegenstand
18 Gegenstand
20 Laserstrahlbündel

| 22 | Gegenstandspunkt |
|---|---|
| 24 | Datenverarbeitungseinrichtung |
| 26 | Kontur |
| 28 | Konturpunkte |
| 30 | projizierte Kontur |
| 32 | projizierte Kontur |
| 33 | Kontur |
| 34 | vergrößerte Kontur |
| 36 | projizierte Kontur |
| 38 | projizierte Kontur |

| D | Abstand |
|---|---|
| $E_p$ | Projektionsgerade |

**Patentansprüche**

1. Verfahren zur Ermittlung einer Wahrscheinlichkeit für eine Kollision zwischen einem Fahrzeug (12) und einem Gegenstand (16, 18) auf der Basis von tiefenaufgelösten Bildern eines Überwachungsbereichs (14) in wenigstens einer Ebene, in dem sich der Gegenstand (16, 18) befindet, und einer aktuellen Relativgeschwindigkeit des Gegenstands (16, 18) gegenüber dem Fahrzeug (12) wenigstens in der Ebene, bei dem
für den Gegenstand (16, 18) und für das Fahrzeug (12) in einer geschätzten Kollisionslage, die der Gegenstand (16, 18) und das Fahrzeug (12) relativ zueinander bei einer Kollision einnehmen, jeweils eine auf eine Projektionsgerade ($E_p$), die im Wesentlichen orthogonal zu dem Vektor einer geschätzten Relativgeschwindigkeit bei Erreichen der Kollisionslage orientiert ist, projizierte Kontur (30, 32, 36, 38) und deren Lage zueinander ermittelt werden, eine Überdeckung der projizierten Konturen (30, 32, 36, 38) ermittelt wird, und
in Abhängigkeit von der Überdeckung der beiden projizierten Konturen (30, 32, 36, 38) die Kollisionswahrscheinlichkeit bestimmt wird.

2. Verfahren nach Anspruch 1,
**dadurch gekennzeichnet,**
**dass** die aktuelle Relativgeschwindigkeit auf der Basis der tiefenaufgelösten Bilder mittels einer Objekt-Verfolgung oder einer Verfolgung von Gegenstandspunkten auf dem Gegenstand (16, 18) ermittelt wird.

3. Verfahren nach Anspruch 1 oder 2,
**dadurch gekennzeichnet,**
eine Schätzung für die Dauer bis zu einer Kollision zwischen dem Fahrzeug (12) und dem Gegenstand (16, 18) ermittelt wird, und dass die Kollisionswahrscheinlichkeit auch in Abhängigkeit von der der geschätzten Dauer bis zu einer Kollision ermittelt wird.

4. Verfahren nach einem der vorhergehenden Ansprüche,
**dadurch gekennzeichnet,**
**dass** eine Kollisionswahrscheinlichkeit nicht ermittelt und/oder auf Null gesetzt wird, wenn die geschätzte Dauer bis zur Kollision einen vorgegebenen Schwellwert überschreitet.

5. Verfahren nach Anspruch 3 oder 4,
**dadurch gekennzeichnet,**
**dass** zur Schätzung der Dauer bis zu einer Kollision ein Modell für eine lineare Relativbewegung von Gegenstand (16, 18) und Fahrzeug (12) verwendet wird.

6. Verfahren nach Anspruch 5,
**dadurch gekennzeichnet,**
**dass** zur Schätzung der Dauer bis zu einer Kollision ein Modell für eine Relativbewegung mit der aktuellen Relativgeschwindigkeit verwendet wird.

7. Verfahren nach einem der vorhergehenden Ansprüche,
**dadurch gekennzeichnet,**
**dass** zur Schätzung der Dauer bis zu einer Kollision ein Radialanteil der Relativgeschwindigkeit verwendet wird, der durch Projektion der Relativgeschwindigkeit auf eine Gerade durch einen Referenzpunkt für den Gegenstand (16, 18) und einen Referenzpunkt für das Fahrzeug (12) erhältlich ist.

8.  Verfahren nach einem der vorhergehenden Ansprüche,
    **dadurch gekennzeichnet,**
    **dass** zur Schätzung der Dauer bis zu einer Kollision zur Bestimmung des Abstands zwischen dem Gegenstand (16, 18) und dem Fahrzeug (12) als Referenzpunkt des Gegenstands (16, 18) der Konturpunkt (28) der dem Gegenstand (16, 18) entsprechenden Kontur (32, 38) verwendet wird, der von einem Referenzpunkt des Fahrzeugs (12) den geringsten Abstand aufweist.

9.  Verfahren nach einem der vorhergehenden Ansprüche,
    **dadurch gekennzeichnet,**
    **dass** zur Schätzung der Dauer bis zu einer Kollision für Konturpunkte (28) der Kontur des Gegenstands (16, 18) jeweils eine konturpunktspezifische Dauer bis zur Kollision geschätzt wird, und dass als geschätzte Dauer bis zu einer Kollision die geringste der ermittelten konturpunktspezifischen Dauern bis zur Kollision verwendet wird.

10. Verfahren nach einem der vorhergehenden Ansprüche,
    **dadurch gekennzeichnet,**
    **dass** die geschätzte Dauer bis zu einer Kollision vor einer Ausgabe oder Speicherung in Bezug auf eine Zeitdifferenz zwischen einem Erfassungszeitpunkt der dem tiefenaufgelösten Bild zugrunde liegenden Daten und der aktuellen Zeit korrigiert wird.

11. Verfahren nach einem der vorhergehenden Ansprüche,
    **dadurch gekennzeichnet,**
    **dass** zur Ermittlung der geschätzten, projizierten Konturen (30, 32, 36, 38) und deren Lage zueinander als Richtung der geschätzten Relativgeschwindigkeit bei Erreichen der geschätzten Kollisionslage die Richtung der aktuellen Relativgeschwindigkeit verwendet wird.

12. Verfahren nach einem der vorhergehenden Ansprüche,
    **dadurch gekennzeichnet,**
    **dass** alle Konturpunkte (28) der Kontur (30, 32, 36, 38) für den Gegenstand in einer Reihenfolge auf- oder absteigender Polarwinkel in einem Koordinatensystem in der Ebene des Überwachungsbereichs (14) geordnet sind, und **dass** zur Ermittlung der auf die Projektionsgeraden ($E_p$) projizierten Kontur (32, 38) des Gegenstands (16, 18) nur der erste und der letzte der geordneten Konturpunkte (28) der Kontur (32, 38) für den Gegenstand (16, 18) verwendet werden.

13. Verfahren nach einem der vorhergehenden Ansprüche,
    **dadurch gekennzeichnet,**
    **dass** wenigstens eine der Konturen (34) oder eine der projizierten Konturen vor dem Ermitteln der Überdeckung mit einem Skalierungsfaktor vergrößert wird.

14. Verfahren nach einem der vorhergehenden Ansprüche,
    **dadurch gekennzeichnet,**
    **dass** bei nicht vorhandener Überdeckung die Kollisionswahrscheinlichkeit in Abhängigkeit von einem Abstand zwischen den projizierten Konturen (30, 32, 36, 38) für den Gegenstand (16, 18) und für das Fahrzeug (12) bestimmt wird.

15. Verfahren nach einem der vorhergehenden Ansprüche,
    **dadurch gekennzeichnet,**
    **dass** die Kollisionswahrscheinlichkeit mit einem nichtverschwindenden Wert nur ermittelt wird, wenn das Fahrzeug (12) eine Geschwindigkeit aufweist, die größer ist als eine vorgegebene Mindestgeschwindigkeit.

16. Verfahren nach einem der vorhergehenden Ansprüche,
    **dadurch gekennzeichnet,**
    **dass** eine Objektverfolgung durchgeführt wird, und
    **dass** die Kollisionswahrscheinlichkeit nur für solche Objekte ermittelt wird, die seit mehreren Zyklen existieren und/ oder eine vorgegebene Erkennungsgüte aufweisen.

17. Verfahren nach einem der vorhergehenden Ansprüche,

**dadurch gekennzeichnet,**
**dass** bei Überschreiten einer vorgegebenen Mindestkollisionswahrscheinlichkeit wenigstens das aktuelle tiefenaufgelöste Bild und/oder Daten einer Objekt-Verfolgung auf der Basis der tiefenaufgelösten Bilder abgespeichert werden.

18. Computerprogramm mit Programmcode-Mitteln, um das Verfahren nach einem der Ansprüche 1 bis 17 durchzuführen, wenn das Programm auf einem Computer ausgeführt wird.

19. Computerprogrammprodukt mit Programmcode-Mitteln, die auf einem computerlesbaren Datenträger gespeichert sind, um das Verfahren nach einem der Ansprüche 1 bis 17 durchzuführen, wenn das Computerprogrammprodukt auf einem Computer ausgeführt wird.

20. Vorrichtung zur Ermittlung einer Wahrscheinlichkeit für eine Kollision zwischen einem Fahrzeug (12) und einem Gegenstand (16, 18), mit
einem Sensor (10) für elektromagnetische Strahlung, mittels dessen in zeitlicher Folge tiefenaufgelöste Bilder eines Überwachungsbereichs (14) in wenigstens einer Ebene erfassbar sind,
einer Einrichtung (24) zur Ermittlung einer aktuellen Relativgeschwindigkeit zwischen dem Fahrzeug (12) und dem Gegenstand (16, 18) wenigstens in der Ebene, und
einer Einrichtung (24) zur Ermittlung der Kollisionswahrscheinlichkeit zwischen dem Fahrzeug (12) und dem Gegenstand (16, 18) auf der Basis eines von dem Sensor erfassten, tiefenaufgelösten Bildes und einer von der Einrichtung zur Ermittlung der aktuellen Relativgeschwindigkeit ermittelten aktuellen Relativgeschwindigkeit, die zur Durchführung eines Verfahren nach einem der Ansprüche 1 bis 17 ausgebildet ist.

21. Vorrichtung nach Anspruch 20,
**dadurch gekennzeichnet,**
**dass** der Sensor für elektromagnetische Strahlung einen Laserscanner (10) umfasst.

22. Vorrichtung nach Anspruch 20 oder 21,
**dadurch gekennzeichnet,**
**dass** die Einrichtung zur Ermittlung einer Kollisionswahrscheinlichkeit Mittel zur Ermittlung einer auf eine Projektionsgerade (Ep) projizierten Kontur (30, 32, 36, 38) für den Gegenstand (16, 18) und für das Fahrzeug (12) in einer geschätzten Kollisionslage und deren Lage zueinander, Mittel zur Ermittlung einer Überdeckung der geschätzten, projizierten Konturen (30, 32, 36, 38), und Mittel zur Bestimmung der Kollisionswahrscheinlichkeit in Abhängigkeit von der Überdeckung der beiden projizierten Konturen (30, 32, 36, 38) aufweist, wobei die Projektionsgerade ($E_p$) im Wesentlichen orthogonal zu dem Vektor einer geschätzten Relativgeschwindigkeit bei Erreichen der geschätzten Kollisionslage, die der Gegenstand (16, 18) und das Fahrzeug (12) relativ zueinander bei der Kollision einnehmen, orientiert ist.

23. Vorrichtung nach einem der Ansprüche 20 bis 22,
**dadurch gekennzeichnet,**
**dass** eine mit der Einrichtung zur Ermittlung einer Kollisionswahrscheinlichkeit über eine Datenverbindung gekoppelte Speichereinrichtung vorgesehen ist, in der bei Überschreiten einer vorgegebenen Mindestkollisionswahrscheinlichkeit wenigstens das aktuelle tiefenaufgelöste Bild und/oder Daten einer Objekt-Verfolgung auf der Basis der tiefenaufgelösten Bilder speicherbar sind.

24. Vorrichtung nach einem der Ansprüche 20 bis 23,
**dadurch gekennzeichnet,**
**dass** die Einrichtung zur Ermittlung einer Kollisionswahrscheinlichkeit über eine Datenverbindung mit einer Einrichtung zur drahtlosen Übertragung von Daten verbunden ist.

**Claims**

1. A method for the determination of a probability of a collision between a vehicle (12) and an object (16, 18) on the basis of depth-resolved images of a monitored zone (14) in at least one plane in which the object (16, 18) is located and of a current relative speed of the object (16, 18) with respect to the vehicle (12) at least in the plane, in which a respective projected contour (30, 32, 36, 38) and the position of each projected contour relative to one another are determined for the object (16, 18) and for the vehicle (12) in an estimated collision position which the object (16, 18) and the vehicle (12) adopt relative to one another in a collision, each said contour being projected onto a projected straight line ($E_p$), which is oriented substantially orthogonal to the vector of an estimated relative speed on reaching the collision position
an overlap of the projected contours (30, 32, 36, 38) is determined, and
the collision probability is determined in dependence on the overlap of the two projected contours (30, 32, 36, 38).

2. A method in accordance with claim 1, **characterized in that** the current relative speed is determined on the basis of the depth-resolved images by means of object tracking or tracking of object points on the object (16, 18).

3. A method in accordance with claim 1 or claim 2, **characterized**
**in that** an estimate for the time period up to a collision between the vehicle (12) and the object (16, 18) is determined; and
**in that** the collision probability is also determined in dependence on the estimated time period up to a collision.

4. A method in accordance with any one of the preceding claims, **characterized in that** a collision probability is not determined and/or is set to zero when the estimated time period up to the collision exceeds a pre-determined threshold value.

5. A method in accordance with claim 3 or claim 4, **characterized in that** a model for a linear relative movement of the object (16, 18) and of the vehicle (12) is used for the estimate of the time period up to a collision.

6. A method in accordance with claim 5, **characterized in that** a model for a relative movement with the current relative speed is used for the estimate of the time period up to a collision.

7. A method in accordance with any one of the preceding claims, **characterized in that** a radial portion of the relative speed is used for the estimate of the time period up to a collision and can be obtained by projection of the relative speed onto a straight line through a reference point for the object (16, 18) and a reference point for the vehicle (12).

8. A method in accordance with any one of the preceding claims, **characterized in that** the contour point (28) of the contour (32, 38) corresponding to the object (16, 18), which has the smallest spacing from a reference point of the vehicle (12), is used as the reference point of the object (16, 18) for the estimate of the time period up to a collision to determine the spacing between the object (16, 18) and the vehicle (12).

9. A method in accordance with any one of the preceding claims, **characterized in that**, for the estimate of the time period up to a collision for contour points (28) of the contour of the object (16, 18), respective time periods up to the collision are estimated for specific contour points; and **in that** the lowest of the determined time periods up to the collision specific to a contour point is used as the estimated time period up to a collision.

10. A method in accordance with any one of the preceding claims, **characterized in that**, prior to an output or to a storing, the estimated time period up to a collision is corrected with respect to a time difference between a sensing time of the data underlying the depth-resolved image and the current time.

11. A method in accordance with any one of the preceding claims, **characterized in that** the direction of the current relative speed is used as the direction of the estimated relative speed on reaching the estimated collision position for the determination of the estimated, projected contours (30, 32, 36, 38) and their position relative to one another.

12. A method in accordance with any one of the preceding claims, **characterized in that** all contour points (28) of the contour (30, 32, 36, 38) for the object are ordered in an order of increasing or decreasing polar angles in a coordinate system in the plane of the monitored zone (14); and **in that** only the first and the last of the ordered contour points (28) of the contour (32, 38) for the object (16, 18) are used for the determination of the contour (32, 38) of the object (16, 18) projected onto the projected straight line ($E_p$).

13. A method in accordance with any one of the preceding claims, **characterized in that** at least one of the contours (34) or one of the projected contours is enlarged by a scaling factor prior to the determination of the overlap.

14. A method in accordance with any one of the preceding claims, **characterized in that**, when there is no overlap present, the collision probability is determined in dependence on a spacing between the projected contours (30, 32, 36, 38) for the object (16, 18) and for the vehicle (12).

**15.** A method in accordance with any one of the preceding claims, **characterized in that** the collision probability is only determined with a non-vanishing value when the vehicle (12) has a speed which is larger than a pre-set minimum speed.

**16.** A method in accordance with any one of the preceding claims, **characterized in that** object tracking is carried out; and **in that** the collision probability is only determined for those virtual objects which have existed for a plurality of cycles and/or have a preset recognition quality.

**17.** A method in accordance with any one of the preceding claims, **characterized in that** at least the current depth-resolved image and/or data from object tracking is/are stored on the basis of the depth-resolved images on exceeding a pre-set minimum collision probability.

**18.** A computer program with program code means to carry out the method in accordance with one of claims 1 to 17, when the program is carried out on a computer.

**19.** A computer program product with program code means which are stored on a computer legible data carrier to carry out the method in accordance with one of claims 1 to 17, when the computer program product is carried out on a computer.

**20.** An apparatus for the determination of a probability of a collision between a vehicle (12) and an object (16, 18), comprising
a sensor (10) for electromagnetic radiation by means of which depth-resolved images of a monitored zone (14) are sensed in at least one plane in a time sequence;
a device (24) for the determination of a current relative speed between the vehicle (12) and the object (16, 18) at least in the plane; and
a device (24) for the determination of the collision probability between the vehicle (12) and the object (16, 18) on the basis of a depth-resolved image sensed by the sensor and of a current relative speed which is determined by the device for the determination of the current relative speed and which is made for the carrying out of a method in accordance with one of claims 1 to 17.

**21.** An apparatus in accordance with claim 20, **characterized in that** the sensor for electromagnetic radiation includes a laser scanner (10).

**22.** An apparatus in accordance with claim 20 or claim 21, **characterized in that** the device for the determination of a collision probability has means for the determination of a contour (30, 32, 36, 38) projected onto a projected straight line ($E_p$) for the object (16, 18) and for the vehicle (12) in an estimated collision position and the position of each contour with respect to one another, means for the determination of an overlap of the estimated projected contours (30, 32, 36, 38) and means for the determination of the collision probability in dependence on the overlap of the two projected contours (30, 32, 36, 38), with the projected straight line ($E_p$) being oriented substantially orthogonal to the vector of an estimated relative speed on reaching the estimated collision position, which the object (16, 18) and the vehicle (12) adopt relative to one another on the collision.

**23.** An apparatus in accordance with any one of the claims 20 to 22, **characterized in that** a memory device is provided which is coupled to the device for the determination of a collision probability via a data link and in which at least the current depth-resolved image and/or data from object tracking can be stored on the basis of the depth-resolved images when a pre-set minimum collision probability is exceeded.

**24.** An apparatus in accordance with any one of the claims 20 to 23, **characterized in that** the device for the determination of a collision probability is connected to a device for the wireless transmission of data via a data connection.

**Revendications**

**1.** Procédé pour déterminer la probabilité d'une collision entre un véhicule (12) et un objet (16, 18) en se basant sur des images à résolution en profondeur d'une zone de surveillance (14) dans au moins un plan dans lequel se trouve l'objet (16,18), et sur une vitesse relative actuelle de l'objet (16, 18) par rapport au véhicule (12) au moins dans le plan, dans lequel
on détermine pour l'objet (16,18) et pour le véhicule (12) dans une position de collision estimée, qu'occupent l'objet (16, 18) et le véhicule (12) l'un par rapport à l'autre lors d'une collision, un contour respectif projeté (30, 32, 36, 38) sur une droite de projection (Ep), orientée essentiellement orthogonalement au vecteur d'une vitesse relative estimée lorsque la position de collision est atteinte, et sa situation,
on détermine un chevauchement des contours projetés (30, 32, 36, 38), et
en fonction du chevauchement des deux contours projetés (30, 32, 36, 38), on détermine la probabilité de collision.

2. Procédé selon la revendication 1,
**caractérisé en ce que** la vitesse relative actuelle est déterminée en se basant sur les images à résolution en profondeur au moyen d'un suivi-objet ou d'un suivi de points sur l'objet (16, 18).

3. Procédé selon la revendication 1 ou 2,
**caractérisé en ce que** l'on détermine une estimation pour la durée jusqu'à une collision entre le véhicule (12) et l'objet (16, 18), et **en ce que** la probabilité de collision est également déterminée en fonction de la durée estimée jusqu'à une collision.

4. Procédé selon l'une des revendications précédentes,
**caractérisé en ce que** l'on ne détermine pas de probabilité de collision et/ou **en ce que** l'on la remet à zéro, si la durée estimée jusqu'à la collision dépasse une valeur seuil prédéterminée.

5. Procédé selon la revendication 3 ou 4,
**caractérisé en ce que** l'on utilise, pour l'estimation de la durée jusqu'à une collision, un modèle pour un mouvement relatif linéaire de l'objet (16, 18) et du véhicule (12).

6. Procédé selon la revendication 5,
**caractérisé en ce que** l'on utilise, pour estimer la durée jusqu'à une collision, un modèle pour un mouvement relatif avec la vitesse relative actuelle.

7. Procédé selon l'une des revendications précédentes,
**caractérisé en ce que** l'on utilise, pour l'estimation de la durée jusqu'à une collision, une part radiale de la vitesse relative, que l'on obtient par projection de la vitesse relative sur une droite à travers un point de référence pour l'objet (16, 18) et un point de référence pour le véhicule (12).

8. Procédé selon l'une des revendications précédentes,
**caractérisé en ce que**, pour estimer la durée jusqu'à une collision afin de déterminer la distance entre l'objet (16, 18) et le véhicule (12), l'on utilise à titre de point de référence de l'objet (16, 18), le point (28) du contour (32, 38) correspondant à l'objet (16, 18) qui présente la plus faible distance depuis un point de référence du véhicule (12).

9. Procédé selon l'une des revendications précédentes,
**caractérisé en ce que**, pour estimer la durée jusqu'à une collision, on estime pour des points (28) du contour de l'objet (16, 18), une durée respective spécifique au point du contour jusqu'à la collision, et **en ce que** l'on utilise comme durée estimée jusqu'à une collision la durée la plus faible des durées déterminées spécifiques aux points du contour jusqu'à la collision.

10. Procédé selon l'une des revendications précédentes,
**caractérisé en ce que** la durée estimée jusqu'à une collision est corrigée avant une fourniture ou une mémorisation, par référence à une différence temporelle entre un instant de détection des données qui constituent le fondement de l'image à résolution en profondeur et le temps actuel.

11. Procédé selon l'une des revendications précédentes,
**caractérisé en ce que**, pour déterminer les contours projetés estimés (30, 32, 36, 38) et leur position l'un par rapport à l'autre, on utilise à titre de direction de la vitesse relative estimée lorsqu'on atteint la position de collision estimée la direction de la vitesse relative actuelle.

12. Procédé selon l'une des revendications précédentes,
**caractérisé en ce que** tous les points (28) du contour (30, 32, 36, 38) pour l'objet sont ordonnés dans une succession avec angles polaires croissants ou décroissants dans un système de coordonnées dans le plan de la zone de surveillance (14), et
**en ce que** pour déterminer le contour (32, 38) de l'objet (16, 18) projeté sur la droite de projection (Ep) uniquement le premier et le dernier point (28) ordonné du contour (32, 38) pour l'objet (16, 18).

**13.** Procédé selon l'une des revendications précédentes,
**caractérisé en ce que** l'un au moins des contours (34) ou des contours projetés est agrandi avec un facteur d'échelle avant de déterminer le chevauchement.

**14.** Procédé selon l'une des revendications précédentes,
**caractérisé en ce que**, en l'absence de chevauchement, la probabilité de collision est déterminée en fonction d'une distance entre les contours projetés (30, 32, 36, 38) pour l'objet (16, 18) et pour le véhicule (12).

**15.** Procédé selon l'une des revendications précédentes,
**caractérisé en ce que** la probabilité de collision avec une valeur non négligeable n'est déterminée que si le véhicule (12) présente une vitesse qui est supérieure à une vitesse minimum prédéterminée.

**16.** Procédé selon l'une des revendications précédentes,
**caractérisé en ce que** l'on exécute un suivi de l'objet, et **en ce que** la probabilité de collision n'est déterminée que pour les objets qui existent depuis plusieurs cycles et/ou qui présentent une qualité de reconnaissance prédéterminée.

**17.** Procédé selon l'une des revendications précédentes,
**caractérisé en ce que**, lors du dépassement une probabilité de collision minimum prédéterminée, on mémorise au moins l'image à résolution en profondeur actuelle et/ou les données d'un suivi de l'objet en se basant sur les images à résolution en profondeur.

**18.** Programme d'ordinateur comprenant des moyens formant code de programme, pour mettre en oeuvre le procédé selon l'une des revendications 1 à 17, lorsque le programme est exécuté sur un ordinateur.

**19.** Produit de programme d'ordinateur comprenant des moyens formant code de programme, mémorisés sur un support de données lisible à l'ordinateur, afin d'exécuter le procédé selon l'une des revendications 1 à 17, lorsque le produit de programme d'ordinateur est exécuté sur un ordinateur.

**20.** Dispositif pour déterminer la probabilité d'une collision entre un véhicule (12) et un objet (16, 18), comprenant un détecteur (10) pour un rayonnement électromagnétique, au moyen duquel des images à résolution en profondeur peuvent être prises en succession temporelle dans une zone de surveillance (14) dans au moins un plan,
des moyens (24) pour déterminer une vitesse relative actuelle entre le véhicule (12) et l'objet (16, 18) au moins dans ledit plan, et
des moyens (24) pour déterminer la probabilité de collision entre le véhicule (12) et l'objet (16, 18) en se basant sur une image à résolution en profondeur prise par le détecteur, et sur une vitesse relative actuelle calculée par le dispositif de détermination de vitesse relative actuelle, qui est réalisé pour mettre en oeuvre un procédé selon l'une des revendications 1 à 17.

**21.** Dispositif selon la revendication 20,
**caractérisé en ce que** le détecteur de rayonnement électromagnétique comprend un scanner à laser (10).

**22.** Dispositif selon la revendication 20 aux 21,
**caractérisé en ce que** les moyens pour déterminer une probabilité de collision incluent des moyens pour déterminer un contour (30, 32, 36, 38), projeté sur une droite de projection (Ep), pour l'objet (16, 18) et pour le véhicule (12) dans une position de collision estimée et dans leur situation l'un par rapport à l'autre, des moyens pour déterminer un chevauchement des contours projetés estimés (30, 32, 36, 38) et des moyens pour déterminer la probabilité de collision en fonction du chevauchement des deux contours projetés (30, 32, 36, 38), dans lequel la droite de projection (Ep) est orientée essentiellement orthogonalement au vecteur d'une vitesse relative estimée lorsqu'on atteint la position de collision estimée, que l'objet (16, 18) et le véhicule (12) occupent l'un par rapport à l'autre lors de la collision.

**23.** Dispositif selon l'une des revendications 20 à 22,
**caractérisé en ce qu'**il est prévu un dispositif de mémorisation, couplé via une ligne de communication de données aux moyens pour déterminer une probabilité de collision, dans lequel, en cas de dépassement d'une probabilité de collision minimum prédéterminée, il est possible de mémoriser au moins l'image à résolution en profondeur actuelle et/ou des données d'un suivi de l'objet en se basant sur les images à résolution en profondeur.

**24.** Dispositif selon l'une des revendications 20 à 23,
**caractérisé en ce que** les moyens pour déterminer une probabilité de collision sont reliés, via une ligne de communication de données, à des moyens pour la transmission sans fil de données.

Fig. 1

EP 1 475 764 B1

```
            ┌─────────────────────────┐
            │ Einlesen eines tiefenauf-│
            │     gelösten Bildes      │──── S10
            └─────────────────────────┘
                        │
                        ▼
               ┌─────────────────┐
               │  Segmentierung  │──── S12
               └─────────────────┘
                        │
                        ▼
            ┌─────────────────────────┐
            │ Segment-Objekt-Zuordnung │──── S14
            │   und Objektneubildung   │
            └─────────────────────────┘
                        │
                        ▼
        ┌───────────────────────────────┐
        │ Ermittlung der aktuellenRelativge-│──── S16
        │ schwindigkeit vrel für nicht neue Objekte │
        └───────────────────────────────┘
                        │
                        ▼
   NEIN              ◇ Veigen > Vmin ? ◇──── S18
 ◀──────────────────
                        │ JA
                        ▼
        ┌───────────────────────────────┐
        │ Für alle Objekte mit Alter von mehr als 4 │
        │ Zyklen: Ermittlung und Ausgabe der ge-│──── S20
        │ schätzten Dauer bis zu einer Kollision und │
        │  der Kollisionswahrscheinlichkeit │
        └───────────────────────────────┘
                        │
                        ▼
        ┌───────────────────────────────┐
        │ Ermittlung und Ausgabe         │──── S22
        │ weiterer Objekteigenschaften   │
        └───────────────────────────────┘
                        │
                        ▼
        ┌───────────────────────────────┐
        │ Prädiktion neuer Objektlagen   │──── S24
        └───────────────────────────────┘
```

Fig. 2

Fig. 3

Fig. 4

Fig. 5

Fig. 6

Bestimme geschätzte Dauer TTC_R bis zur Kollision als geringste für einen der Konturpunkte $P_i$ der Kontur des Gegenstands geschätzte Dauer TTC_$P_i$ bis zur Kollision — S20M

Ermittlung einer korr. geschätzten Dauer TTC_$R_{corr}$ bis zur Kollision — S20E

TTC_$R_{corr}$ < TTC_$R_{max}$ — S20G

NEIN

JA

Bestimme Projektion des Fahrzeugs und Projektion der Objektkontur auf Projektionsgerade orthogonal zu der Gerade durch die Referenzpunkte bzw. $v_{rad}$ — S20H

$P_{Koll} = 0$

S20F

Ermittlung der Überdeckung U — S20I

Ermittlung der Kollisionswahrscheinlichkeit $P_{koll}$ durch Normierung von U und Multiplikation mit Funktion f(TTC_R) — S20N

Ausgabe $P_{koll}$, TTC_$R_{corr}$ — S20L

Fig. 7

Fig. 8